(19) Europäisches Patentamt
European Patent Office
Office européen des brevets

(11) EP 0 424 141 B1

(12) **EUROPEAN PATENT SPECIFICATION**

(45) Date of publication and mention of the grant of the patent:
**29.04.1998 Bulletin 1998/18**

(51) Int Cl.$^6$: **H01L 41/04**

(21) Application number: **90311428.8**

(22) Date of filing: **18.10.1990**

# (54) Drive control circuit for an ultra-sonic stepping motor

Steuerschaltung für einen Ultraschallschrittmotor

Circuit de commande pour un moteur pas-à-pas à ultrason

(84) Designated Contracting States:
**CH DE GB LI**

(30) Priority: **20.10.1989 JP 273082/89**
**19.06.1990 JP 158683/90**
**27.06.1990 JP 166860/90**
**27.06.1990 JP 166859/90**
**27.06.1990 JP 166858/90**

(43) Date of publication of application:
**24.04.1991 Bulletin 1991/17**

(73) Proprietor: **SEIKO EPSON CORPORATION**
**Shinjuku-ku Tokyo (JP)**

(72) Inventor: **Miyazawa, Osamu**
**Suwa-shi, Nagano-ken (JP)**

(74) Representative: **Miller, Joseph et al**
**J. MILLER & CO.**
**34 Bedford Row,**
**Holborn**
**London WC1R 4JH (GB)**

(56) References cited:
**EP-A- 0 325 062**

- **JAPANESE JOURNAL OF APPLIED PHYSICS, SUPPLEMENTS. vol. 26, no. 26-1, 1987, TOKYO JA pages 191 - 193; TAMOTU IIJIMA ET AL.: 'Ultrasonic motor using flexural standing wave'**
- **PATENT ABSTRACTS OF JAPAN vol. 12, no. 189 (E-616)June 2, 1988 & JP-A-62 293 980 (CANON INC. ) December 21, 1987**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 424 141 B1

Printed by Jouve, 75001 PARIS (FR)

## Description

The present invention relates to an ultra-sonic motor of the type in which ultra-sonic vibrations are utilised to effect a stepping movement.

As disclosed in Japanese Laid Open Patent Publication No. 58-93477, Japanese Patent Publication No. 59-37673, Japanese Laid Open Patent Publication No. 59-122385, Japanese Laid Open Patent Publication No. 60-51478, etc., a variety of ultra-sonic motors of the type utilising ultra-sonic vibrations have previously been proposed. These ultra-sonic motors have all been such that the motor is rotated or moved continuously for so long as drive voltages are applied. Therefore, such conventional ultra-sonic motors require feedback control for controlling the number of revolutions, stopping position or rotational speed of the motor, and a control circuit for this purpose is essential. As a result, there has been the problem that the control system is inevitably complicated.

EP-A-0 325 062 discloses a travelling wave motor which is rotated continuously while drive voltages are applied.

It is an object of the present invention to provide an ultra-sonic motor having a simplified drive control circuit.

According to one aspect of the present invention, there is provided an ultra-sonic motor comprising a stationary part having a plurality of vibrators, a movable part having a plurality of projections, which are arranged respectively to contact the stationary part during vibration thereof; and a drive control circuit comprising a drive circuit for applying drive voltages selectively to the vibrators, and a control circuit for generating drive control signals for controlling the supply of the drive voltages by the drive circuit to have a frequency substantially equal to the resonant frequency of the vibrators and each to have a predetermined phrase pattern, characterised in that the drive control circuit vibrates the vibrators so as to develop a standing wave in the stationary port so as to effect stepping movement of the movable part.

In one embodiment of the ultrasonic motor is characterised in that the projections correspond in number to nodes produced when said vibrators are set in vibration, and in that the control circuit supplies the drive circuit with supply voltages of positive and/or negative polarities such that drive voltages having a frequency substantially equal to the resonant frequency of the vibrators and the stator are successively applied in a predetermined phase pattern to said vibrators.

According to another aspect of the present invention, there is provided an ultra-sonic motor including a stator having a plurality of vibrators successively arranged so as to excite said stator, and a rotor formed with projections corresponding in number to nodes produced when said vibrators are set in vibration, said projections being arranged to contact said stator, characterised by a drive control circuit for vibrating the vibrators so as to develop a standing wave in the stationary part so as to effect stepping movement of the rotor, the drive control circuit comprising as drive circuit for applying drive voltages having a predetermined frequency in a predetermined phase pattern to said vibrators, as induced voltage comparison circuit for detecting an induced voltage in a selected one of the vibrators to generate a detection output, a driving/detection switching circuit for interrupting all or part of the outputs of the drive circuit at a predetermined timing so as to output an induced voltage of one or more of said vibrators corresponding to said interrupted output or outputs to said induced voltage comparison circuit, and a frequency follow up circuit responsive to the detection output of said induced voltage comparison circuit to adjust the frequency of said drive voltages generated from said drive circuit.

In an alternative embodiment, the drive circuit is supplied with one or other of a positive polarity and a negative polarity supply voltage for generating the drive voltages. only a single power source is therefore required, which simplifies the construction of the motor.

In still another embodiment, the drive circuit is supplied with one or other of a positive polarity and a negative polarity supply voltage, and the drive voltages are applied successively in accordance with the predetermined phase pattern to the vibrators, which are connected in series. By thus connecting respective terminals of the vibrators in common, there is the advantage of simplifying the construction in cases where the provision of a grounding structure for the vibrators is not easy.

A further embodiment of the invention features a drive control circuit including drive control means whereby the drive voltages are successively applied to the vibrators in accordance with a predetermined phase pattern, and the application of the drive voltage to a selected one of the vibrators is stopped for a given amount of time at intervals of half a period. In this instance, the drive control means include control means for generating control signals of mutually opposite phase in accordance with a given pattern, a gate control circuit for receiving the control signals to deliver a gate control signal determining the quiescent time of each of selected vibrator at intervals of half a period, and gate circuit subjected to on/off control by the gate control signal for applying the drive voltages to the vibrators. The application of the drive voltage to the selected vibrator is then stopped a given amount of time at intervals of half a period so that a node is produced on each vibrator having no drive voltage applied thereto, thereby setting the stepping movement of the rotor to any given amount, such as 1/2 steps or 3/2 steps.

Still another embodiment of the invention includes a drive control circuit having drive control means whereby the application of the drive voltages to the vibrators is prevented at a time when the rotor has moved a given amount after the start of each stepping operation. When it is confirmed that the rotor has moved the given amount, e.g. one step, the application of the drive voltages is stopped so that the vibrators are driven only partially, and further the charges on the vibrators may be short circuited at the timing of phase reversal, thereby ensuring operation at a reduced power level.

For instance, rotation detecting means may be provided for detecting that the rotor-has moved the given amount after the start of each stepping operation. Such rotation detecting means may include an encoder connected to the rotor, and a decoder for sending a stop signal to the drive control means when the output of the encoder indicates the given amount of movement. Alternatively, instead of using an encoder, the rotation detecting means may be arranged to detect the maximum induced voltage in the vibrator to thereby detect the amount of movement of the rotor. Thus, the amount of movement of the rotor is detected in accordance with the output of the encoder or with the induced voltage in the vibrator and the application of the drive voltages is prevented when a given amount of movement has been reached.

A further embodiment of the invention includes drive control means whereby when the rotor has failed to complete a given amount of movement even after the expiration of a given period of time after the start of each stepping operation, the detection of the induced voltage in one of the vibrators is terminated and the drive voltage from the drive circuit is applied to this vibrator as well as to the other vibrators. As a result, when the rotor has failed to move the given amount even after the expiration of the given period of time following the start of each stepping operation, the drive voltage is applied to all of the vibrators for driving purposes.

Still another embodiment of the present invention has a drive control circuit including drive control means for selectively driving the vibrators such that when vibrations are caused either the drive voltage is not applied to any such vibrator positioned at a resulting vibration anti-node or alternatively the drive voltage is applied only to such a vibrator positioned at the resulting vibration anti-node. The vibrators are thus selectively driven such that, when the vibrations are caused, each vibrator positioned at the resulting vibration anti-node either has the application of the drive voltage thereto prevented or only has the drive voltage applied thereto at this time.

In a further embodiment of the present invention, the drive control circuit includes drive control means whereby the vibrators opposite in phase to one another are short circuited at the timing of phase reversal of the drive voltages. As a result, half of the charge on one of the vibrators is transferred to the charge on the other vibrator thereby ensuring a reduction in the power level.

Still another embodiment of the present invention is provided with a drive control circuit including monitoring means composed of an induced voltage comparison circuit for detecting the induced voltage in one vibrator to determine the difference between the detected voltage and a maximum voltage, a driving/detection switching circuit for interrupting some or all of the outputs of the drive circuit at a given timing so as to supply the vibrator induced voltage corresponding to the interrupted output (s) to the induced voltage comparison circuit, and a frequency follow up circuit for adjusting the frequency of the drive voltages generated from the drive circuit in accordance with the output of the induced voltage comparison circuit. After the drive voltages of a given frequency have been applied to the vibrators so that the rotor makes a stepping movement, the driving/detection switching circuit is changed over at a given timing and the induced voltage in at least one of the vibrators is detected. Then, the difference is determined so that the frequency of the drive voltages generated from the drive circuit may be adjusted accordingly. As the induced voltage of the vibrator attains the maximum voltage in the resonant condition, the frequency of the drive voltages is adjusted to obtain this maximum voltage.

In this way, the actual vibrating conditions of the vibrators are detected to adjust the frequency of the drive voltages, the stator attached to the vibrators is caused to vibrate at its resonant frequency, and an optimum driving force is obtained.

An alternative form of this embodiment includes a phase comparator circuit and utilises the fact that the phase difference between the drive voltage and the induced voltage for a particular vibrator becomes 90° in the resonant condition. In this instance, the phase difference between the drive voltage and the induced voltage is determined and the frequency of the drive voltages is adjusted in accordance with the variation between this phase difference and a phase difference of 90°.

Preferably, the frequency follow up circuit includes a counter which receives as a drive signal the output from the induced voltage comparison circuit and which counts oscillation signals from an oscillator for adjusting the frequency of the drive voltages generated from the drive circuit in accordance with the output of the counter. As long as the output from the induced voltage comparison circuit is present until the induced voltage reaches the maximum voltage, the number of oscillation signals is counted and the frequency of the drive voltages is adjusted in accordance with the counter output.

Preferably, the driving/detection switching circuit effects the switching between the drive circuit and the induced voltage comparison circuit at the vibration anti-node portion of the vibrators.

In a further embodiment of the present invention, there is provided a drive control circuit including a driving follow up control circuit whereby when the induced voltage attains a given magnitude, it is detected to send a drive signal to the frequency follow up circuit.

In a modification of this embodiment, the driving follow up control circuit sends the drive signal to the frequency follow up circuit at the expiration of a given period of time after the start of each stepping operation.

In another modification of this embodiment, the driving follow up control circuit detects the difference between the induced voltage of the current period and the induced voltage of the preceding period so as to send the drive signal to the frequency follow up circuit when the difference becomes less than a given magnitude.

A driving follow up control circuit may include a latch circuit and a counter. The latch circuit may then detect the difference between the induced voltage of the current period and the induced voltage of the preceding period for every step so that, when the difference is less than a given magnitude, the driving/detection switching circuit is caused to interrupt the outputs of the drive circuit. The counter counts the outputs of the latch circuit and, when the count reaches a given value, a drive signal is sent to the frequency follow up circuit.

In other words, the difference between the induced voltage of the current period and the induced voltage of the preceding period is detected for every step so as to interrupt the application of the drive voltage when the difference becomes smaller than a given value, and the number of interrupts is counted so as to effect a frequency follow up when the count reaches a given value. In particular, when the rotor makes a movement of one step, the application of the drive voltages is stopped and the frequency follow up is effected at a given period.

The driving follow up control circuit may alternatively include a latch circuit, a timer circuit and an AND gate. The difference between the induced voltage of the current period and the induced voltage of the preceding period is then detected for every step so that when the difference becomes less than a given magnitude, the latch circuit is re-set. An output is generated when the timer circuit measures a given period of time after the start of each stepping operation. The outputs of the latch circuit and the timer circuit are applied to the AND gate so that if, for example, the latch circuit is not re-set after the expiration of the given period of time after the start of each stepping operation the AND gate sends a drive signal to the frequency follow up circuit to cause it to effect the frequency follow up. In other words, if the induced voltage is not increased even after the expiration of the given period of time, the frequency of the drive voltages is considered improper and the frequency follow up is effected.

Further, the arrangement may be such that when the latch circuit detects the difference between the induced voltage of the current period and the induced voltage of the preceding period for every step and the difference becomes less than a given magnitude, the latch circuit is re-set and the driving/detection switching circuit is caused to interrupt the outputs of the drive circuit. The timer circuit generates an output when it measures a given period of time after the start of each stepping operation. The AND gate receives the outputs of the latch circuit and the timer circuit to send the drive signal to the frequency follow up circuit. In addition, the latch circuit interrupts the output of the driving/detection switching circuit when the difference between the induced voltage of the current period and the induced voltage of the preceding period becomes less than a given magnitude.

The invention will be described further, by way of example, with reference to the accompanying drawings, in which:

Figure 1 is a schematic block diagram showing a drive control circuit for an ultra-sonic stepping motor according to the present invention;
Figures 2a to 2e are diagrams for explaining the operation of the ultra-sonic stepping motor;
Figure 3 is a sectional view showing the construction of one example of the ultra-sonic stepping motor;
Figure 4 is a plan view of a stator-rotor section of the ultra-sonic motor of Figure 3;
Figure 5 is a plan view showing the construction of another example of the ultra-sonic stepping motor;
Figure 6 is a diagram showing vibration modes and stepping driving conditions of the ultra-sonic motor of Figure 5;
Figure 7 is a timing chart showing the phases of drive voltages applied in the vibration modes of Figure 6;
Figure 8 is a timing chart of the drive voltages themselves;
Figure 9 is a plan view showing the construction of another example of the ultra-sonic stepping motor;
Figure 10 is a diagram showing the vibration modes for the ultra-sonic stepping motor of Figure 9;
Figure 11 is a timing chart showing the phases of drive voltages applied in the vibration modes of Figure 6;
Figure 12 is a timing chart of the drive voltages themselves corresponding to Figure 11;
Figure 13 is a circuit diagram showing details of one example of the drive control circuit of Figure 1;
Figure 14 is a timing chart representing the operation of the circuit of Figure 13;
Figures 15 and 16 are circuit diagrams showing details of further examples of the drive control circuit of Figure 1;
Figure 17 is a circuit diagram showing details of a first example of a modification of the drive control circuit of Figure 1;
Figure 18 is a timing chart representing the operation of the circuit of Figure 17;
Figure 19 is a timing chart showing the phases of drive voltages corresponding to the timing chart of Figure 18;
Figure 20 is a diagram showing the positions of nodes in an ultra-sonic stepping motor driven by the drive control circuit of Figure 17;
Figure 21 is a circuit diagram showing details of a second example of the modified drive control circuit;
Figure 22 is a timing chart representing the operation of the circuit of Figure 21;
Figure 23 is a timing chart showing the phases of drive voltages corresponding to the timing chart of Figure 22;

Figure 24 is a diagram showing the positions of nodes in an ultra-sonic stepping motor driven by the drive control circuit of Figure 21;

Figure 25 is a circuit diagram showing details of a third example of the modified drive control circuit;

Figure 26 is a timing chart showing the phases of drive voltages applied in the circuit of Figure 25;

Figure 27 is a diagram showing the positions of nodes in an ultra-sonic stepping motor driven by the drive control circuit of Figure 25;

Figure 28 is a circuit diagram showing details of a fourth example of the modified drive control circuit;

Figure 29 is a timing chart representing the operation of the circuit of Figure 28;

Figures 30A and 30B are, respectively, a timing chart showing the phases of drive voltages applied in the circuit of Figure 28 and the positions of the nodes in an ultra-sonic stepping motor driven by the drive control circuit of Figure 28;

Figure 31 is a diagram schematically illustrating various types of ultra-sonic stepping motors;

Figure 32 is a schematic block diagram of a drive control circuit according to another embodiment of the present invention;

Figure 33 is a timing chart representing the operation of the circuit of Figure 32;

Figure 34 is a circuit diagram showing details of one example of the circuit of Figure 32;

Figure 35 is a timing chart representing the operation of the circuit of Figure 34;

Figure 36 is a schematic block diagram of a drive control circuit according to still another embodiment of the present invention;

Figure 37 is a circuit diagramshowing details of one example of the circuit of Figure 36;

Figure 38 is a timing chart representing the operation of the circuit of Figure 37;

Figure 39 is a circuit diagram showing details of another example of the circuit of Figure 36;

Figure 40 is a timing chart representing the operation of the circuit of Figure 39;

Figure 41 is a schematic block diagram of a drive control circuit for an ultra-sonic stepping motor according to still another embodiment of the present invention;

Figure 42 is a circuit diagram showing details of one example of the circuit of Figure 41;

Figure 43 is a timing chart representing the operation of the circuit of Figure 42;

Figure 44 is a circuit diagram of a modified drive control circuit for an ultra-sonic stepping motor according to the present invention;

Figure 45 is a timing chart representing the operation of the circuit of Figure 44;

Figure 46 is a circuit diagram of another example of the modified drive control circuit of Figure 44;

Figure 47 is a timing chart representing the operation of the circuit of Figure 46;

Figure 48 is a circuit diagram of another modified drive control circuit for an ultra-sonic stepping motor according to the present invention;

Figures 49 and 50 are timing charts representing the operation of the circuit of Figure 48;

Figure 51 is a schematic block diagram of a drive control circuit for an ultra-sonic stepping motor according to still another embodiment of the present invention;

Figure 52 is a schematic block diagram of a modification of the drive control circuit of Figure 51;

Figure 53 is a circuit diagram showing details of one example of the circuit of Figure 51;

Figure 54 is a timing chart representing the operation of the circuit of Figure 53;

Figure 55 is a schematic block diagram of drive control circuit for an ultra-sonic stepping motor according to still another embodiment of the present invention;

Figure 56 is a timing chart representing the operation of the embodiment of Figure 55;

Figures 57, 59, 61, 63 and 65 are circuit diagrams of examples of the drive control circuit of Figure 55; and

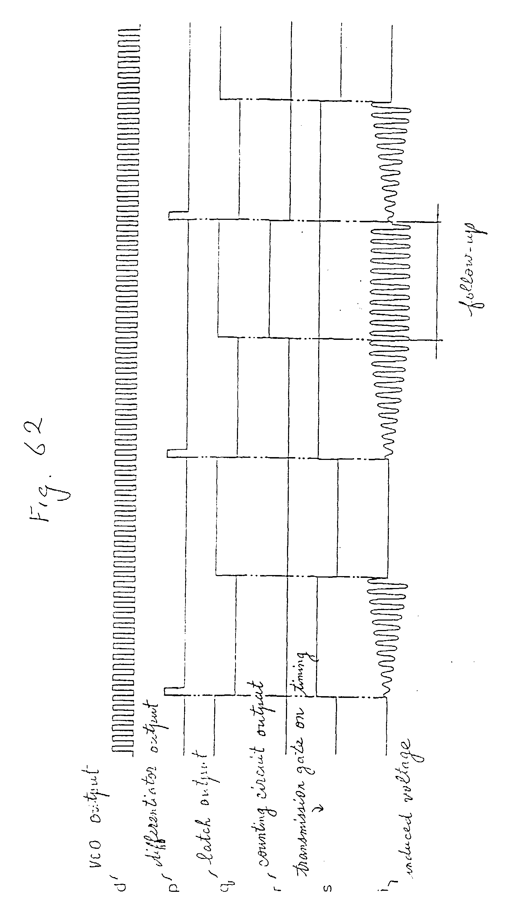

Figures 58, 60, 62, 64 and 66 are timing charts representing, respectively, the operation of the circuits of Figures 57, 59, 61, 63 and 65.

The basic construction and operation of a surface wave driven stepping motor to which the present invention may be applied will be explained first.

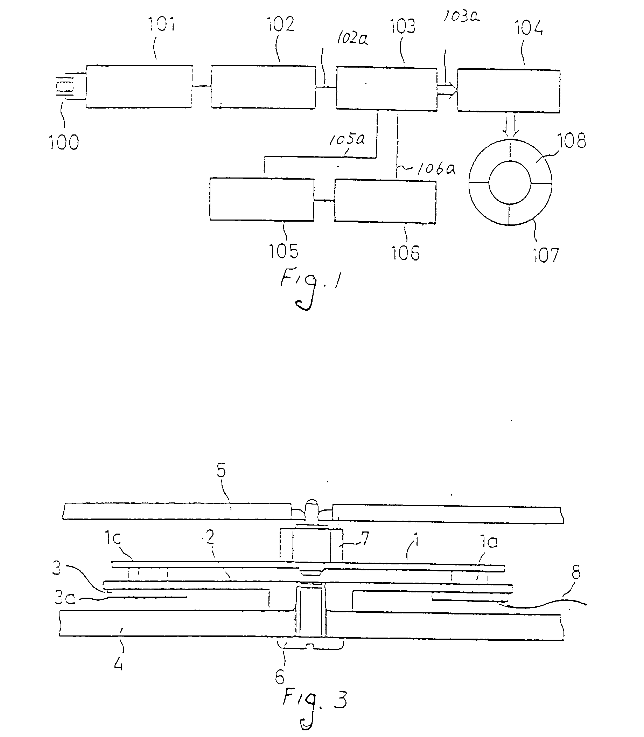

Figure 1 is a block diagram showing schematically a surface wave driven stepping motor and its drive control circuit. As shown, a quartz crystal plate 100 is connected to a crystal oscillator circuit 101, and a frequency divider circuit 102 is provided for dividing the frequency of the output signal from the crystal oscillator circuit 101. A control circuit 103 serves for receiving and processing an oscillation signal 105a from an oscillation circuit 105, oscillating at the same frequency as the resonant frequency of a vibrating unit 107, and an output signal 106a from a phase inverting circuit 106 for inverting the phase of the oscillation signal from the oscillation circuit 105, so as to generate drive control signals 103a. The output signal 102a of the frequency divider circuit 102 serves as a control signal for controlling the oscillation signal 105a and the output signal 106a of the phase inverting circuit 106, which is opposite in phase to the output signal 105a. A driver circuit 104 amplifies the drive control signals 103a from the control circuit 103 to apply drive voltages to the vibrating unit 107, which includes vibrators 108. In the illustrated case, the vibrating unit 107 is composed of four vibrators 108, which in turn are adapted to vibrate independently of one another.

Figures 2a to 2e are diagrams representing the operating principle of the surface wave driven stepping motor, which will be described for the case where piezo-electric elements are used for the vibrators.

Figure 2a shows a fixed phase vibration mode. As shown in the Figure, a rotor 1 is formed with projections 1a, 1b, 1c and 1d and a piezo-electric unit 3 is attached to a side of a stator 2 which is opposite to the rotor 1, with the projections 1a and 1c partially contacting the stator 2. The piezo-electric element 3 includes four vibrators, which are alternatively classified as A and B, the adjacent vibrators A and B being deformed to be opposite in phase with each other. The symbol N designates the nodes in the the vibration modes of the stator 2.

Figure 2b shows the vibration mode which is opposite in phase to that of Figure 2a. In this condition, the projections 1b and 1d are partially in contact with the stator 2.

In Figures 2a and 2b, forces 10 and 11 in directions indicated by the arrows are, respectively, applied to the projections 1a and 1b etc. of the rotor 1 which are in contact with the stator 2 or the portions which are respectively positioned at the same interval or multi-fold interval with respect to the nodes N of the stator 2. At this time, the forces 10 and 11 on the projections in the vibration modes of Figures 2a and 2b have components tending towards the adjacent nodes and therefore the rotor 1 is urged in directions 10a and 11a by the forces tending towards the nodes N which are positioned nearby.

Figures 2c and 2d show the cases where the positional relations of the stator 2 and the rotor 1 are different from those of Figures 2a and 2b. In the cases of Figures 2c and 2d, the rotor 1 is subjected to forces 12 and 13 having components in the directions of the arrows 12a and 13a (in the opposite direction to the directions 10a and 11a) tending towards the nodes N positioned nearby.

Figure 2e is produced by superposing Figures 2a to 2d one upon another.

In any of these cases, it will be seen that the projections 1a to 1d of the rotor 1 are each moved towards one of the nodes N of the stator 2 so as to be positioned thereon. As a result, if the positions of the nodes N are moved stepwise, the rotor 1 is moved in a step like manner, whereby the motor operates as a stepping motor.

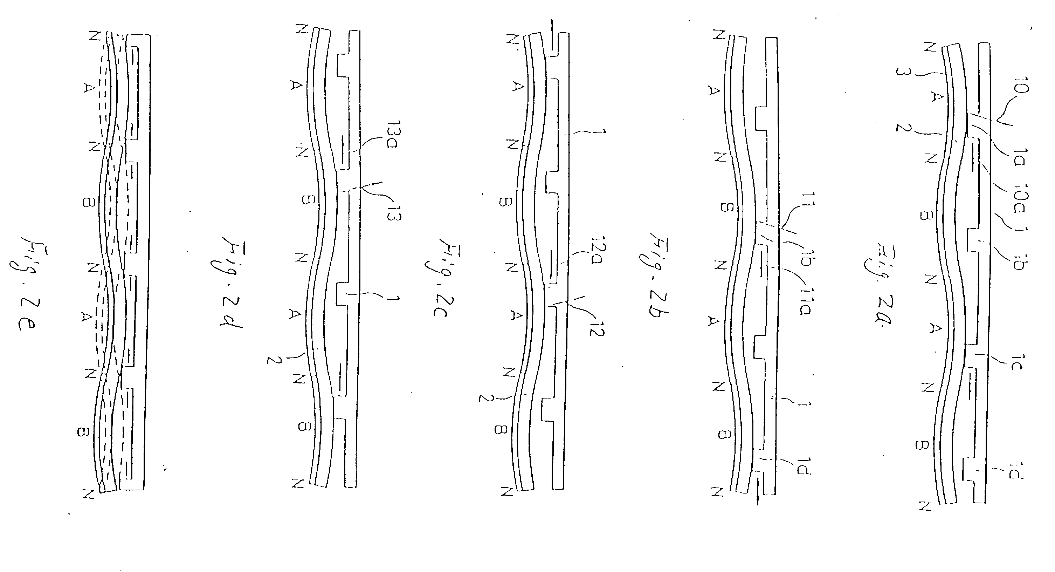

Figure 3 is a sectional view showing by way of example the construction of an ultra-sonic stepping motor, which is a rotary type motor, and Figure 4 is a plan view of the rotor-stator section of the motor. In these Figures, a ground plate 4 has the stator 2 fastened thereto by a screw 6. A ring type bearing 5 is provided for rotatably guiding the rotor 1, a pinion 7 receiving the turning force of the rotor 1. Head wires 8 serve for applying a voltage to an electrode pattern 3a of piezo-electric elements 3. In the present embodiment, projections 1a to 1d are selectively formed on the rotor 1 in the direction of the thickness thereof.

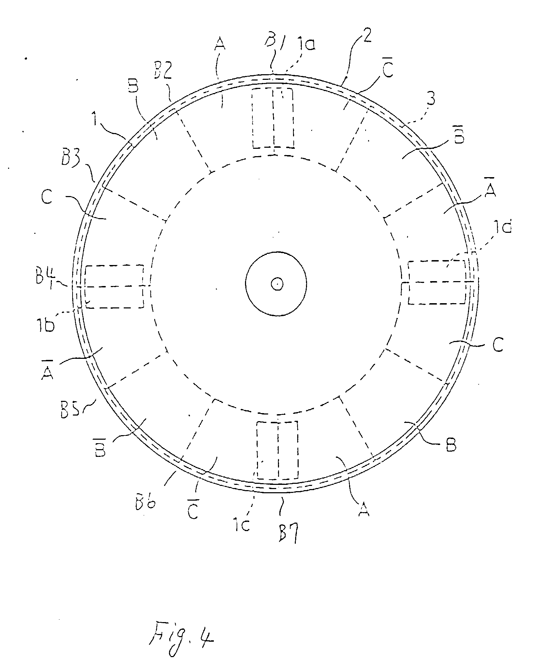

Figure 5 is a plan view showing another exemplary construction of the ultra-sonic stepping motor, which is a rotary type motor. In this embodiment, a projection 2a is formed along the whole circumference of the stator 2 in the direction of the thickness thereof and projections 1a to 1d are formed to extend radially on the rotor 1.

The constructions of Figures 3 and 5 show, by way of example, cases where the rotor 1 and the stator 2 are in contact at four places (the locations of the four projections). In addition, the vibrating unit formed by the piezo-electric elements 3 includes twelve vibrators as indicated by the broken lines and, for the purposes of the following description, the vibrators are designated by the symbols A, B, C, $\bar{A}$, $\bar{B}$ and $\bar{C}$, a drive voltage of the same phase being applied to each vibrator of the same symbol. Also, the vibration modes as defined by the travelling positions of one node are sequentially designated by symbols B1 to B7. It is to be noted that in the present embodiment the nodes N are formed at four places and the number of places where the nodes can be formed is twelve along the whole circumference.

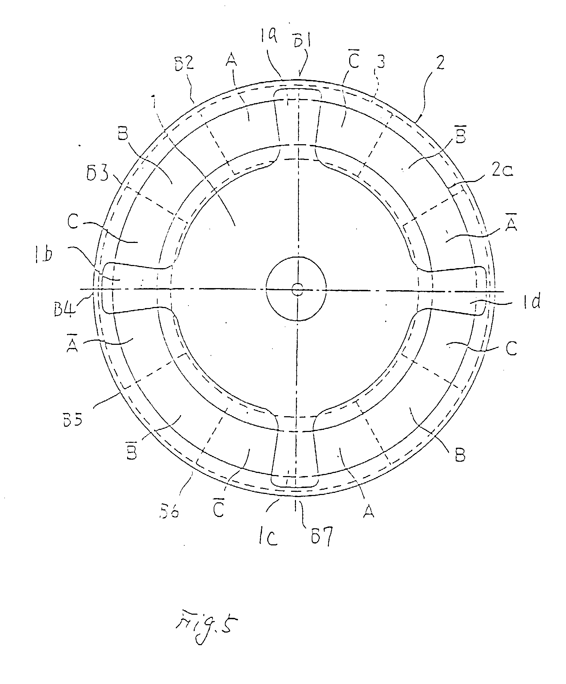

Figure 6 shows the manner in which the previously mentioned ultra-sonic stepping motor is driven as a linear development, using the symbols corresponding to Figure 5, for purposes of explanation. The broken lines show the vibration mode, and the phase condition of the voltages applied to the respective vibrators at each instant are designated by + or - for convenience sake.

In the vibration mode B1, the vibrators A, B and C and $\bar{A}$, $\bar{B}$ and $\bar{C}$, respectively, form groups, and the two groups vibrate with a 180° phase difference therebetween, thereby placing the projections 1a, 1b, 1c and 1d of the rotor 1 in the positions shown.

In the vibration mode B2, the vibrators B, C and $\bar{A}$ and $\bar{B}$, $\bar{C}$ and A, respectively, form groups, whereas the vibrators C, $\bar{A}$ and $\bar{B}$ and $\bar{C}$, A and B, respectively, form groups in the vibration mode B3. Similarly, the vibration modes B3 to B6 are repeated successively and the rotor 1 is moved in a stepwise manner. In the case of the rotary type motor of Figure 5, one full rotation is completed in twelve steps.

On the other hand, if the motor is stepped in the opposite direction by reversing the illustrated vibration modes B1 to B6, switching being effected so as to obtain for example a vibration mode B2 after the vibration mode B3, the rotor 1 is moved in a direction opposite to the previously mentioned direction.

As will be seen from Figure 6 and the associated description, the surface wave driven stepping motor can be easily constructed as a linear motor.

Figure 7 is a timing chart of the drive voltage phases for producing the vibration modes shown in Figure 6. For instance, in order to produce the vibration mode B1, a positive (+) phase drive voltage is applied to the vibrators A, B and C and a negative (-) phase drive voltage is applied to the vibrators $\bar{A}$, $\bar{B}$ and $\bar{C}$. The control is effected by the control circuit 103 so that, if the oscillation signal 105a from the oscillation circuit 105 has a positive phase and the oppositely phased output signal 106a of the phase inverting circuit 106 has a negative phase, switching between the two is effected at the timing of the control signal 102a from the frequency divider circuit 102. It is to be noted that while six different kinds of drive control signals 103a are required for the vibrators A, B, C, $\bar{A}$, $\bar{B}$ and $\bar{C}$, there is the reverse relation between the vibrators A and $\bar{A}$, B and $\bar{B}$ and C and $\bar{C}$, respectively, so that if the direction of polarisation is reversed, the equivalent operation can be obtained with three different kinds of drive control signal.

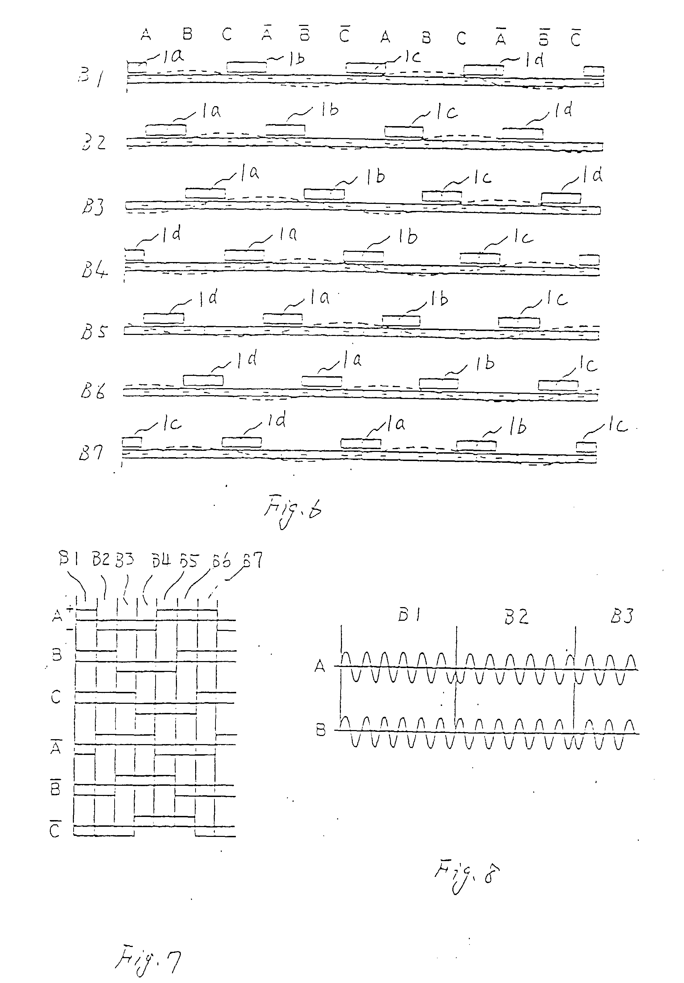

Figure 8 is a timing chart of the drive voltages applied to the vibrator elements A and B, respectively, showing, for example, that oppositely phased drive voltages are applied to the vibrators A and B in the vibration mode B2 and same phased drive voltages are applied to the vibrators A and B in the vibration mode B3. In this instance, the drive voltages in the respective vibration modes are sinusoidal waves and their frequencies are selected to coincide with the resonant frequency of the stator to which the vibrators are attached.

As will be seen from the foregoing description, the phases of the drive voltages applied to the respective vibrators are suitably switched to thereby realise stepping driving having twelve division steps per rotation.

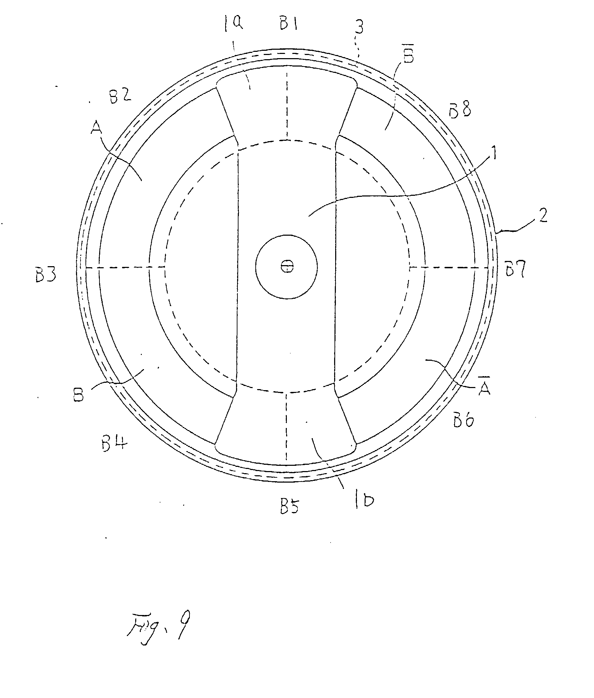

Figure 9 is a plan view showing the construction of another example of the ultra-sonic stepping motor. The vibrating unit formed by the piezo-electric units 3 includes vibrators A, $\bar{A}$, B and $\bar{B}$ and a rotor 1 and a stator 2 in contact with each other at two positions or contact portions 1a and 1b. The number of nodes N is two and, as indicated below, the number of places where nodes N can be produced is eight.

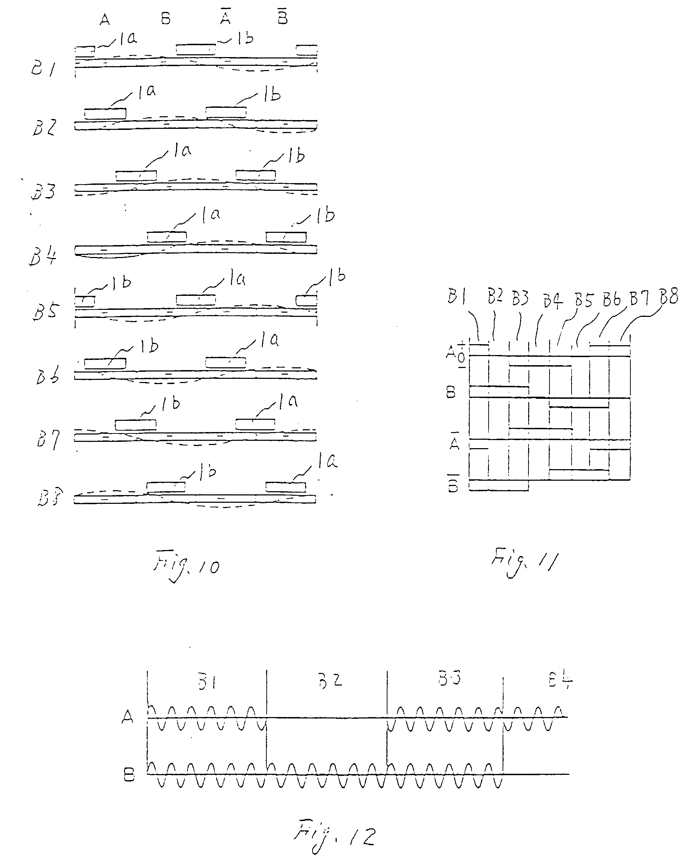

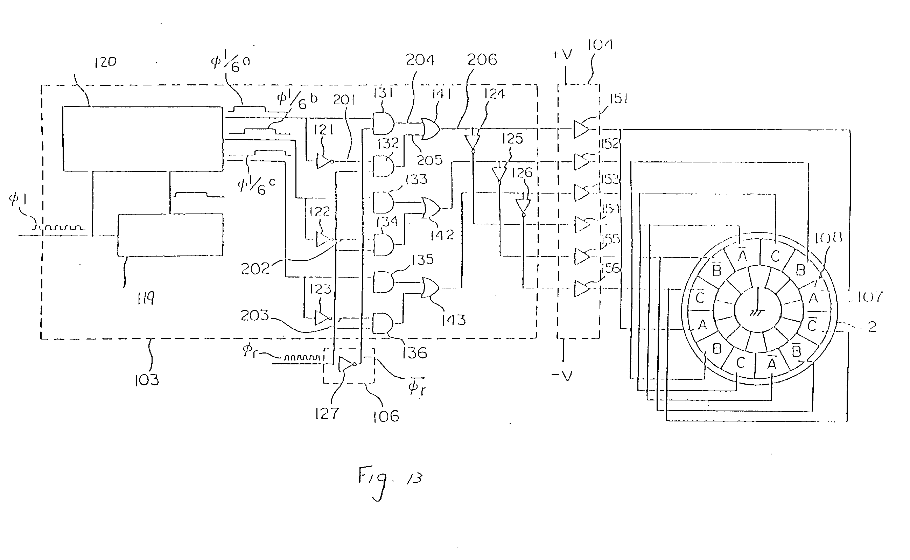

Figure 10 illustrates the respective vibration modes B1 to B8 and the positional relations of the contact portions 1a and 1b, and Figure 11 is a timing chart of the phase of the drive voltages required for producing the vibration modes of Figure 10. Figure 12 is a timing chart of the drive voltages applied to the vibrators A and B.

In Figure 11, the signs (+) and (-) represent oppositely phased conditions and the sign "0" represents a condition where no drive voltage is applied. Thus, in this embodiment, the ultra-sonic stepping motor has eight division half steps per rotation.

It is to be noted that while the above described embodiments have been described as applied to a rotary type of stepping motor by way of example, there is no limitation to their detailed constructions, the form of vibration mode, the kind and construction of the vibrators, etc., provided that the rotor is shifed to the nodes in the driving and the manner of driving the vibrator elements is successively changed so as to move the rotor in a stepwise manner.

Also, the oscillation circuit 105 may be adapted to utilise the output of the crystal oscillator circuit 101, or alternatively it may be a self oscillation circuit which detects the vibration of the vibrating unit 107 so as to resonate it under the optimum conditions. There is no inconvenience even if the control signal 102a is not based on the output signal of the quartz crystal plate 100.

Also, after the ultra-sonic stepping motor has been moved to a desired position, there exists a frictional force between the rotor and the stator and, therefore, the motor is maintained at its halted position even after stopping the driving.

Figure 13 is a circuit diagram of a first example of the drive control circuit of Figure 1. The control circuit 103 includes a 1/6 frequency divider circuit 119, a shift register 120, inverters 121, 122, 123, 124, 125 and 126, AND gates 131, 132, 134, 135 and 136 and OR gates 141, 142 and 143. The phase inverting circuit 106 includes an inverter 127. The driver circuit 104 includes buffers 151, 152, 153, 154, 155 and 156 and each of the buffers is supplied with positive polarity and negative polarity supply voltages to generate drive voltages which oscillate between the positive and negative polarities. A vibrating unit 107 is attached to the stator 2 and includes a plurality of the vibrators 108. Each of the vibrators 108 is supplied at one terminal thereof with a drive voltage from a corresponding one of the buffers 151, 152, 153, 154, 155 and 156, its other terminal being connected to a common ground.

This embodiment of the drive control circuit is adapted for single step (30°) per second driving of the ultra-sonic stepping motor having a 2λvibration mode of twelve division steps per rotation.

Although not shown in Figure 13, the crystal oscillator circuit 101 and the frequency divider circuit 102 of Figure 1 may be equivalent in construction to such circuits in a conventional electronic watch, and the oscillation circuit 105 may comprise for example a CR oscillation circuit or self excited oscillation circuit.

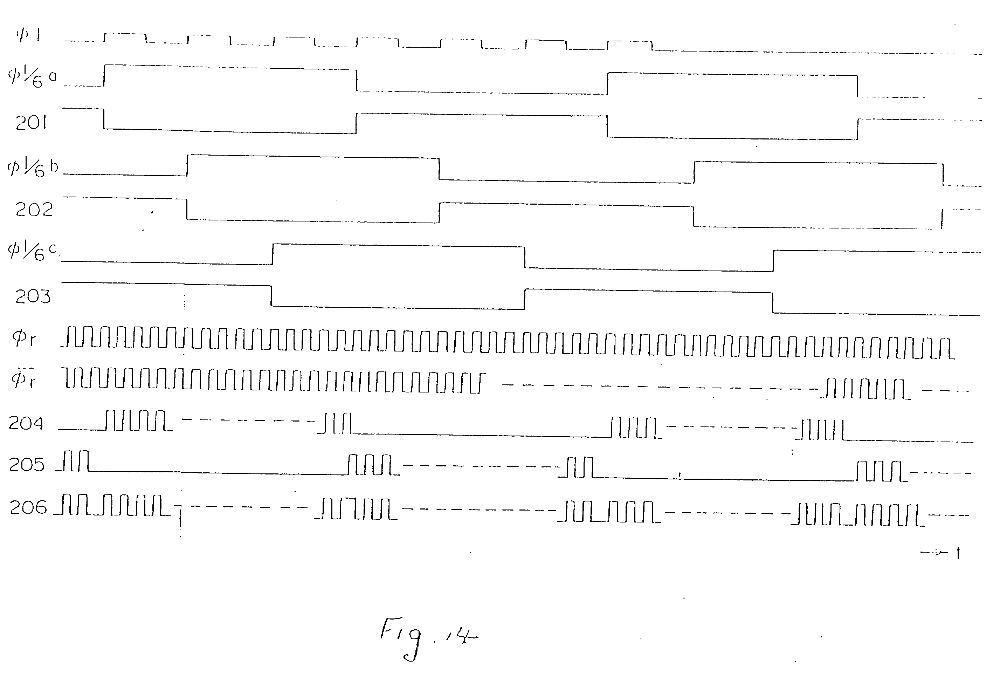

Figure 14 is a timing chart representing the operation of the drive control circuit constructed as described above. When a 1 Hz control signal $\phi 1$ from the frequency divider circuit 102 of Figure 1 is applied to the frequency divider circuit 119 and the shift register 120, the 1/6 frequency divider circuit 119 generates signals subjected to 1/6 frequency division and these signals are supplied to the shift register 120. Thus, the shift register 120 generates 1/6 Hz signals $\phi 1/6a$, $\phi 1/6b$ and $\phi 1/6c$, which are shifted in phase by one second from one another and which are each reversed in phase at intervals of three seconds.

The signal $\phi 1/6a$ is applied to the AND gate 131, and is also inverted by the inverter 121, which in turn applies the inverted signal 201 to the AND gate 132. The oscillation signal $\phi r$ from the oscillation circuit 105 is applied to the AND gate 132 and the output signal $\phi\bar{r}$ of the phase inverting circuit 106 is applied to the AND gate 131. As a result, the AND gate 131 generates an output signal 204 representing the logical products of the signal $\phi 1/6a$ and the output signal $\phi\bar{r}$. The AND gate 132 generates an output signal 205 representing the logical product of the inverted signal 201 of the signal $\phi 1/6a$ and the oscillation signal $\phi r$. The output signals 204 and 205 are supplied to the buffer 151 through the OR gate 141 and also to the buffer 154 through the inverter 124.

The operations based on the signals ϕ1/6b and ϕ1/6c are basically the same as in the case of the signal ϕ1/6a so that, after their inverted signals 202 and 203 have been obtained, the signals are processed in the like manner as the previously mentioned signal ϕ1/6a. The resulting drive control signals applied to the buffers 152, 153, 155 and 156 are respectively shifted by one second from the drive control signals to the buffers 151 and 154. Thus, the driver circuit 104 generates six different drive voltages, each of the buffers applying to the vibrators 108 a drive voltage which oscillates between the positive polarity voltage and the negative polarity voltage at the frequency of the oscillation signal ϕr in accordance with the drive control signal received thereby for instantaneously driving two of the vibrators 108 at a time. Thus, every third one of the vibrators 108 is driven in either the same phase or the opposite phase at one time so that a flexure mode of vibration 2λ is produced and the resulting vibrations drive the rotor 1 in a stepwise manner.

It is to be noted that the drive voltages are ideal sinusoidal waves and this requires a filter circuit means (not shown) for passing the frequency contents of the oscillation signal ϕr to be arranged after the output of the driver circuit 104 for example, whereby to convert the drive voltages to sinusoidal waves.

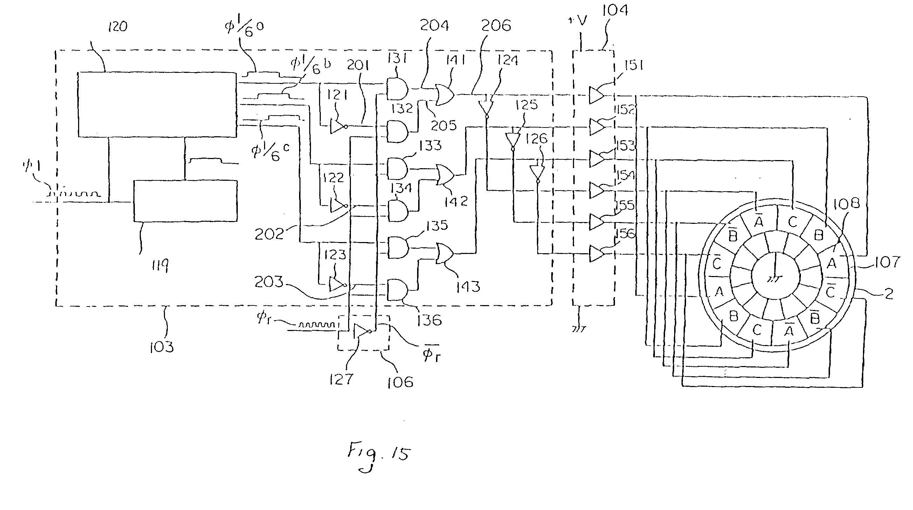

Figure 15 is a circuit diagram of a drive control circuit for an ultra-sonic stepping motor according to another embodiment of the present invention. This embodiment differs from the previously described embodiment in that only the positive polarity voltage is supplied to the driver circuit 104 and the negative electrode is grounded instead of being supplied with the negative polarity voltage. As a result, only positive polarity drive voltages are applied to the vibrators 108 and thus there is the advantage that the circuit is well suited for operation under no load or light load conditions and that only a single power source is required, although the output is reduced to one half as compared with the previously mentioned embodiment. It is to be noted that in the embodiment of Figure 15 a negative polarity supply voltage may be used in place of the positive polarity supply voltage.

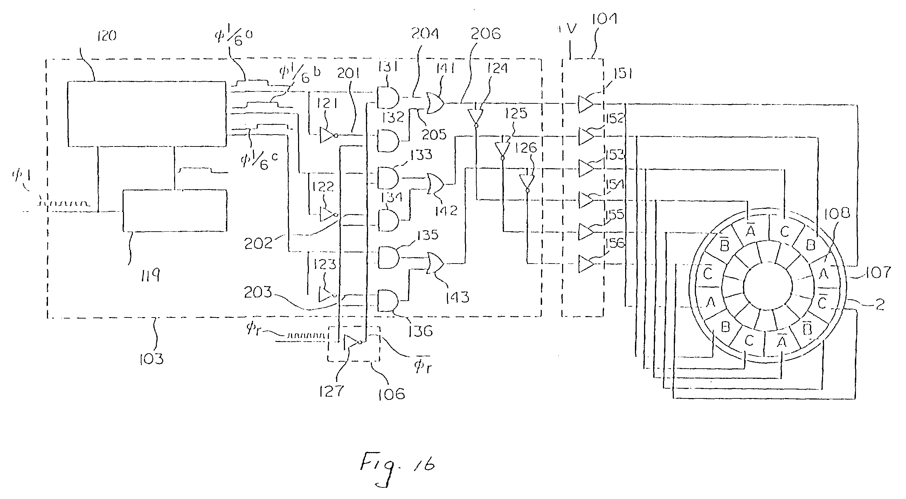

Figure 16 is a circuit diagram of a drive control circuit for an ultra-sonic stepping motor according to still another embodiment of the present invention. This embodiment differs from the embodiment of Figure 15 in that the driver circuit 104 and the vibrators 108 are not grounded. Instead, the vibrators, e.g. A and $\bar{A}$, are connected in series and therefore the drive voltage applied to each vibrator is reduced to one half as compared with the embodiment of Figure 15. Thus, although the output is reduced to one half as compared with the embodiment of Figure 15, there is no need to ground the vibrators 108, which gives a resulting simplification of the construction. Particularly, while the formation of the grounding structure is difficult in cases where the stator 2, the ground plate 4 shown in Figure 3 etc. are made from non-conductive materials, the use of a structure such as that of the present embodiment has the effect of simplifying the manufacture. It is to be noted that it is possible to use a negative polarity supply voltage in place of the positive polarity supply voltage even in the embodiment of Figure 16.

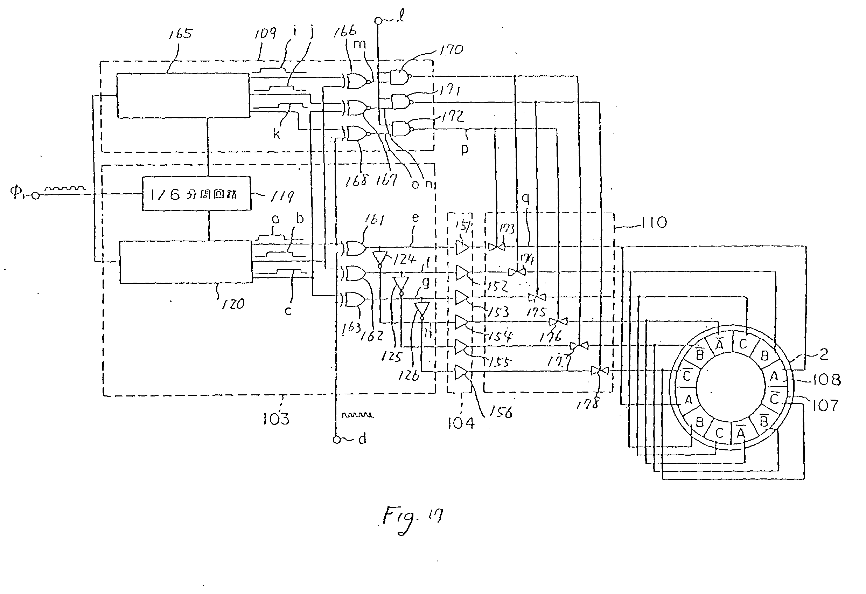

Figure 17 is a circuit diagram of a drive control circuit for a surface wave driven stepping motor according to still another embodiment of the present invention. The control circuit 103 includes 1/6 frequency divider circuit 119, a shift register 120, inverters 124 to 126 and exclusive OR circuits 161 to 163. The driver circuit 104 includes buffers 151 to 156, and each of the buffers is supplied with positive polarity and negative polarity drive control signals so as to output a drive voltage which oscillates between the positive and negative polarities. The vibrating unit 107 is attached to the stator 2 and includes a plurality of the vibrators 108. A state control circuit 109 includes a shift register 165, exclusive NOR circuits 166 to 168 and NAND gates 170 to 172. A gate circuit 110 includes transmission gates 173 to 178, which are subjected to on/off control by gate control signals from the gate control circuit 109.

This example of the drive control circuit is adapted for single step (30°) per second driving of the ultra-sonic stepping motor having a 2 λ vibration mode of twelve division steps per rotation.

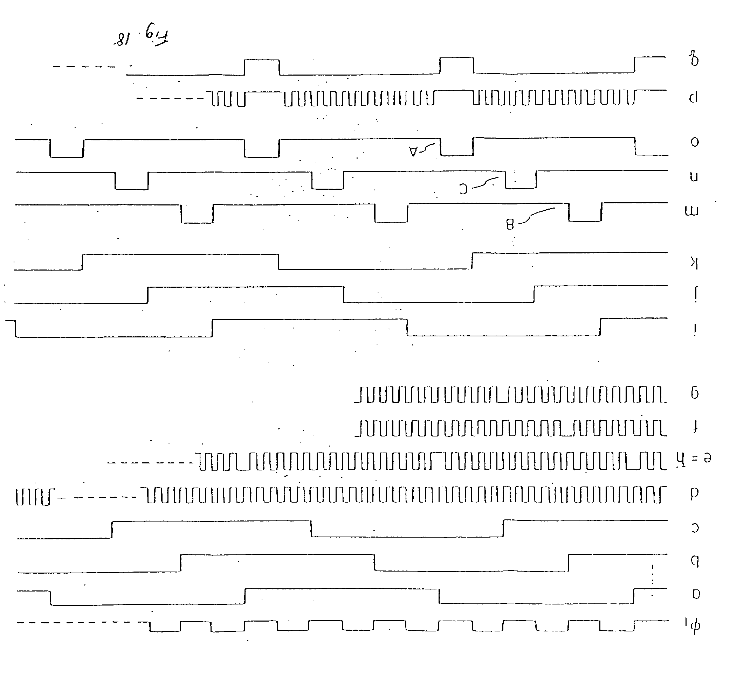

Figure 18 is a timing chart representing the operation of the drive control circuit of Figure 17. The 1 Hz control signal ϕ1 from the frequency divider circuit 102 of Figure 1 is applied to the 1/6 frequency divider circuit 119 so that the signal subjected to 1/6 frequency division is generated from the 1/6 frequency divider circuit 119 and supplied to the shift registers 120 and 165. The shift register 120 generates 1/6 Hz signals $\underline{a}$, $\underline{b}$ and $\underline{c}$, which are shifted in phase by one second from each other and which are inverted in phase every three seconds.

The signal $\underline{a}$ is applied, along with an oscillation signal $\underline{d}$, to the exclusive OR circuit 161, whose output signal $\underline{e}$ is in turn applied to the buffer 151 of the driver circuit 104 and is also inverted by the inverter 124. The inverted signal $\underline{h}$, is applied to the buffer 154. Similarly, the signals $\underline{b}$ and $\underline{c}$ are respectively subjected, along with the oscillation signal $\underline{d}$, to exclusive OR operation in the exclusive OR circuits 162 and 163 whose outputs $\underline{f}$ and $\underline{g}$ are respectively applied directly and through the inverters 125 and 126 to the buffers 152, 153, 155 and 156 of the driver circuit 104. At this time, if the gate circuit 110 is open, the drive voltages from the driver circuit 104 are sequentially applied to the vibrators 108 and the rotor 1 is caused to rotate by steps in accordance with the changes in the phase of the drive voltages.

In the gate control circuit 109, the shift register 165 generates signals $\underline{i}$, $\underline{j}$ and $\underline{k}$ which are respectively similar to but delayed in phase by one second from the signals $\underline{a}$, $\underline{b}$ and $\underline{c}$ of the shift register 120. Thus, for example, the signal $\underline{i}$ is applied, along with the signal $\underline{b}$, to the ex-

clusive NOR circuit 166 whose output signal m is in turn applied, along with a step switching signal l to the NAND gate 170. Similarly, the other output signals j and k are respectively applied to the NAND gates 171 and 172 through the exclusive NOR circuits 167 and 168. At this time, if the step switching signal l is at a level L, the gate control signals from the NAND gates 170 to 172 are all held at a level H so that as mentioned previously the drive voltages from the driver circuit 104 are all applied to the vibrators 108 thereby causing one step driving.

Then, when the step switching signal l is changed to the level H, the NAND gates 170 to 172 respectively invert the output signals m to o of the exclusive NOR circuits 166 to 168. For instance, the NAND gate 172 receives the output signal o of the exclusive NOR circuit 168 and the step switching signal l (at the level H) to perform the NAND logic operation thereon so as to send a gate control signal p to the transmission gate 173. As a result, the transmission gate 173 is subjected to on/off control so that its output signal g becomes low or drops for one half second as shown in the Figure. In other words, there is a time zone during which no drive voltage is applied to the vibrators A. This is the same with the other vibrators $\bar{A}$, B, $\bar{B}$, C and $\bar{C}$, the timings each being shifted by one second.

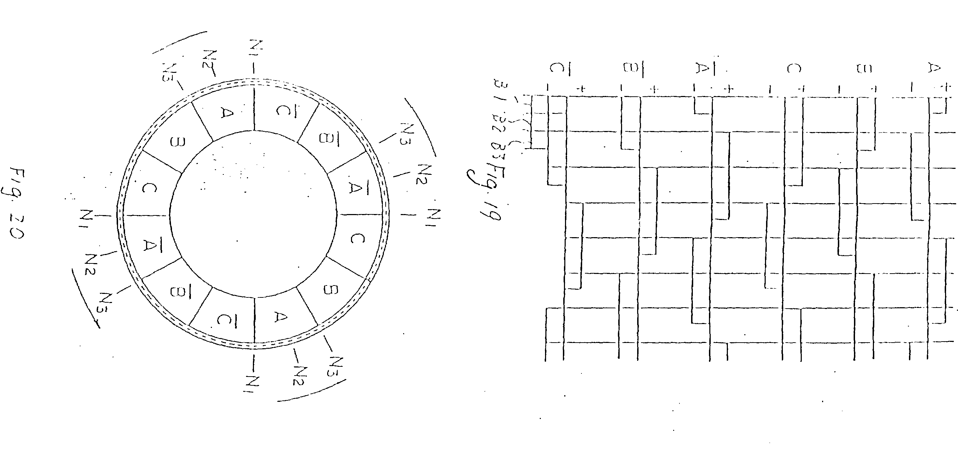

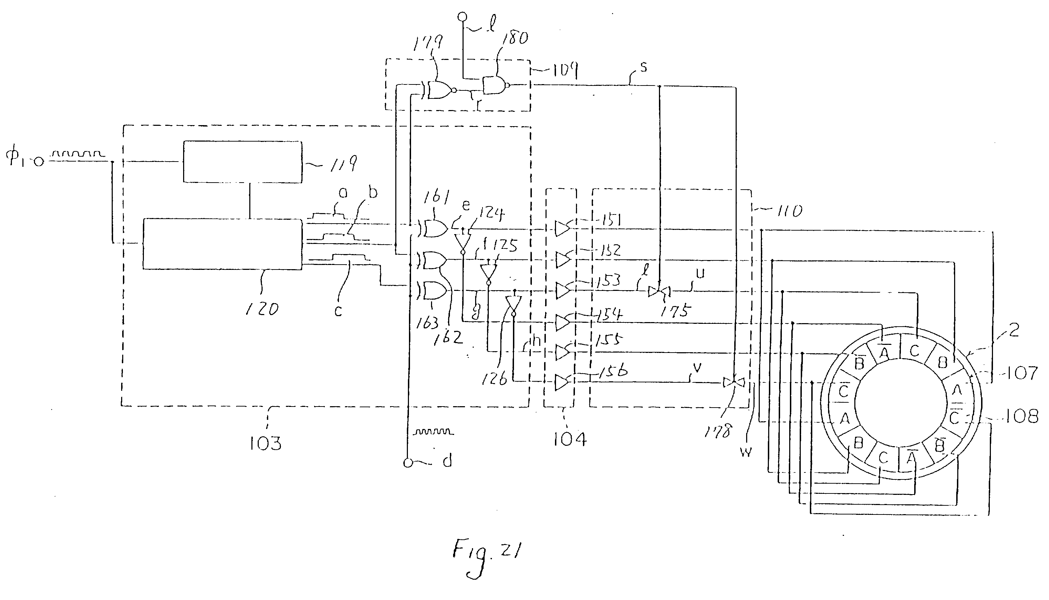

Figure 19 is a timing chart showing the relations between the drive voltage phases in such a case, and Figure 20 is a diagram showing the places of occurrence of nodes in such a case.

In the vibration mode B1, the drive voltage is applied to each of the vibrators so that as in the case of the one step driving, a node N1 is produced between the vibrators to which the drive voltages of different phases are applied, i.e. the vibrators C and $\bar{A}$, and the vibrators $\bar{C}$ and A.

Then, in the vibration mode B2, no drive voltage is applied to the vibrators A and A and thus a node N2 is produced in the central portion of each of the vibrators A and $\bar{A}$. On the other hand, in the vibration mode B3, the drive voltage is applied to each of the vibrators so that a node N3 is produced between the vibrators A and B and the vibrators $\bar{A}$ and $\bar{B}$ as in the case of the one step driving. In a like manner, the place of occurrence of a node is shifted by half a step and the rotor is moved in half steps correspondingly.

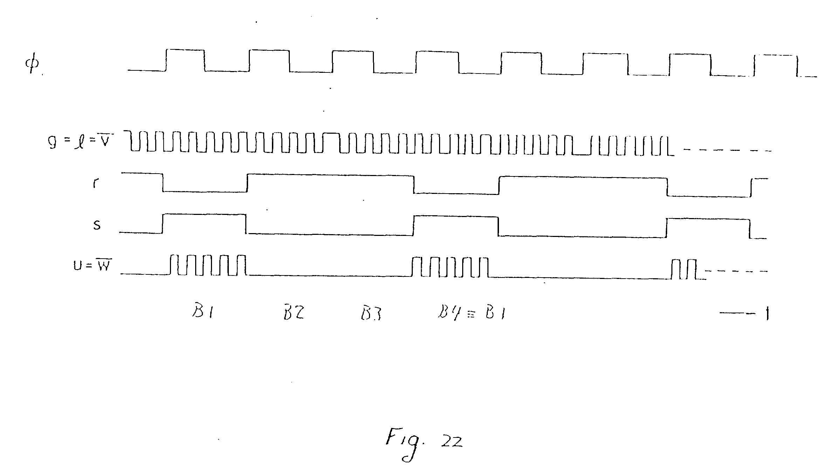

Figure 21 is a circuit diagram of a drive control circuit according to still another embodiment of the present invention, which is constructed so as to perform a 3/2 step driving operation. In Figure 21, there is a gate control circuit 109 including an exclusive NOR circuit 179 and a NAND gate 180. A gate circuit 110 includes transmission gates 175 and 178 for respectively on/off controlling the drive voltages which are applied to the vibrators C and $\bar{C}$. Figure 22 is a timing chart representing the operation of the drive control circuit of Figure 21.

The signals a and b from the shift register 120 are applied to the exclusive NOR circuit 179 of the gate control circuit 109 so that if the step switching signal l is at the level H, the NAND gate 180 generates an inverted signal s from the output signal r of the exclusive NOR circuit 179. The leading edge of the signal s is in synchronism with that of the signal a and its pulse width is one second. Therefore, drive voltages u and w are respectively applied to the vibrators C and $\bar{C}$.

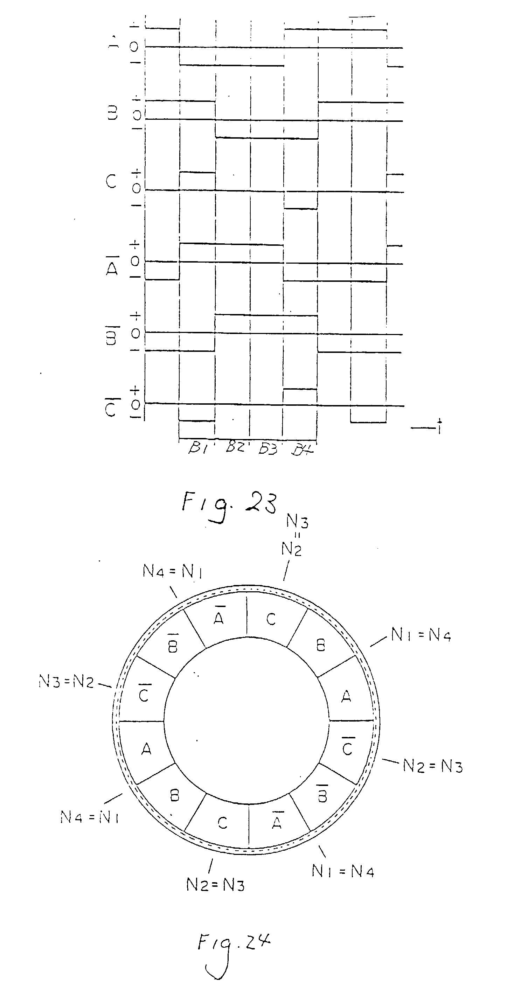

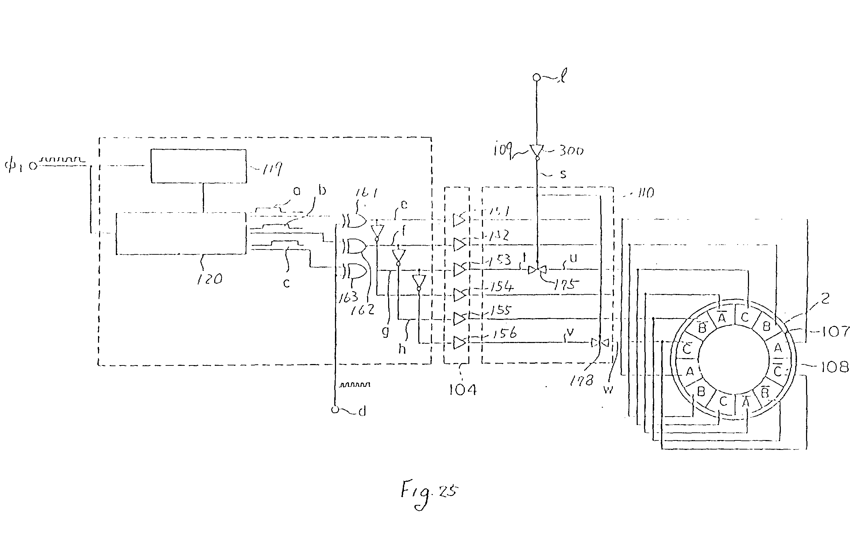

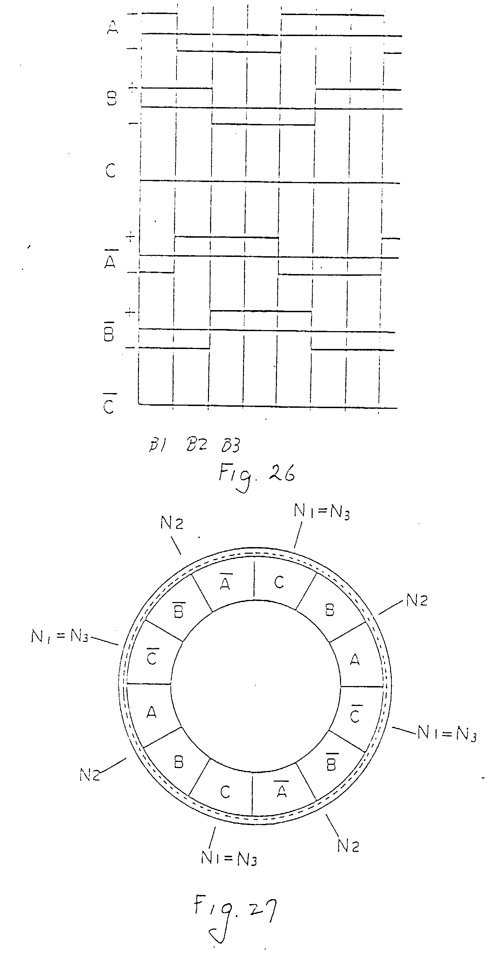

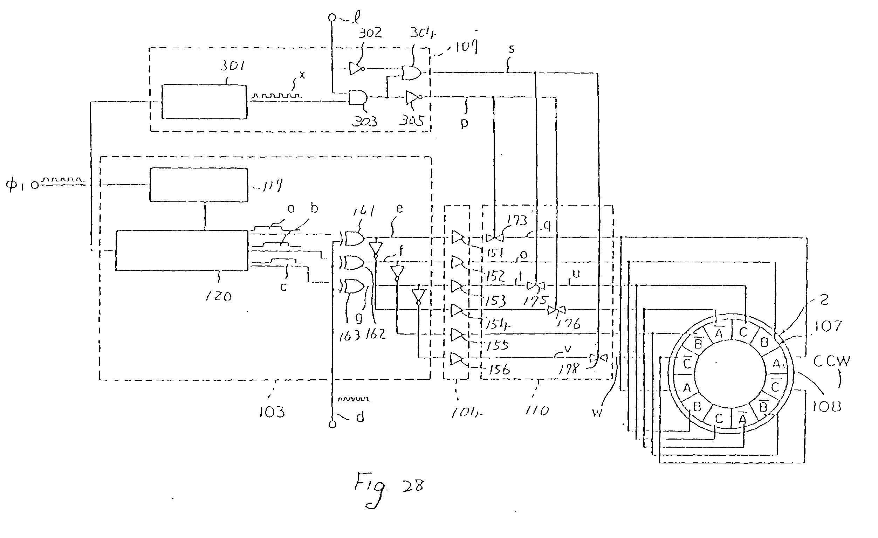

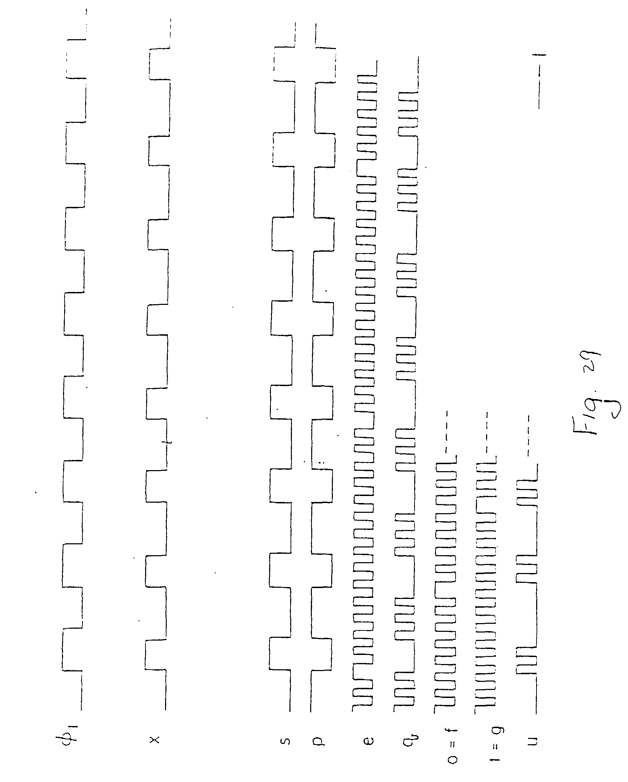

Figure 23 is a timing chart showing the relation between the drive voltage phases in such a case, and Figure 24 is a diagram showing the positions of nodes in such a case.

For instance, in the vibration mode B1 in Figure 23, a node N1 is produced between the vibrators A and B and between the vibrators $\bar{A}$ and $\bar{B}$. In a vibration mode B2, no drive voltage is applied to the vibrators C and $\bar{C}$ and therefore a node N2 is produced in the central portion of each of the vibrators C and $\bar{C}$. Further, in the vibration mode B3, no drive voltage is again applied to the vibrators C and $\bar{C}$ so that a node N3 is produced in the central portion of each of the vibrators C and $\bar{C}$ in the same positions as the node N2. Then, in the vibration mode B4, as in the case of the vibration mode B1, the drive voltage is applied to each of the vibrators and therefore a node N4 is produced between the vibrators A and B and between the vibrators $\bar{A}$ and $\bar{B}$. In a like manner, the successive nodes are produced.

As a result, the nodes are produced at intervals of 3/2 steps and the rotor is moved in response to the shifting of the nodes, that is it is driven in 3/2 steps.

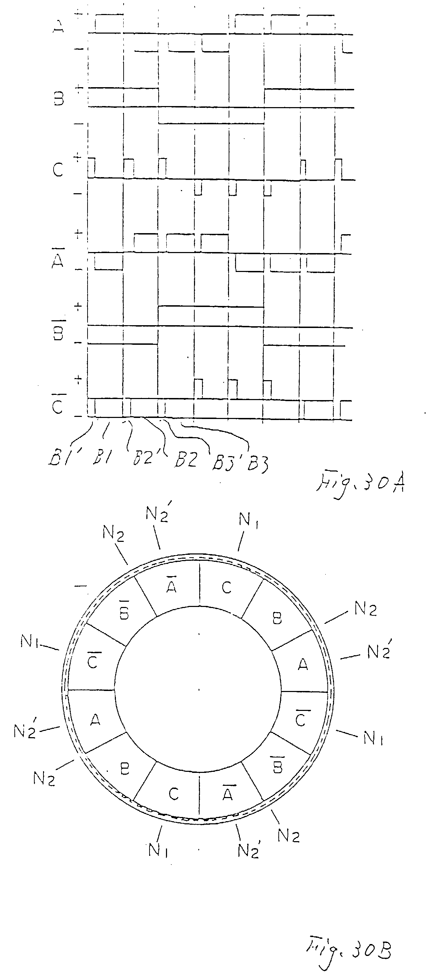

Figure 25 is a circuit diagram of a drive control circuit according to still another embodiment of the present invention, which is designed so that no drive voltage is applied to the vibrators C and $\bar{C}$, thereby realising a 3/2 step driving. The gate control circuit 109 includes an inverter 300 so that when the step switching signal l is at the level H, the output of the inverter 300 goes to the level L and the transmission gates 175 and 178 are closed fully thereby completely preventing the application of any drive voltage to the vibrators C and $\bar{C}$.

Figure 26 is a timing chart showing the phases of the drive voltages in such a case, and Figure 27 is a diagram showing the positions of the nodes. In the vibration mode B1 in Figure 26, a positive phase drive voltage is applied to each of the vibrators A and B and a negative phase drive voltage is applied to each of the vibrators $\bar{A}$ and $\bar{B}$, thereby producing a node N1 in the central portion of each of the vibrators C and $\bar{C}$. Then, in the vibration mode B2, a positive phase drive voltage is applied to each of the vibrators $\bar{B}$ and $\bar{A}$ and a negative phase drive voltage is applied to each of the vibrators $\bar{B}$ and A, thereby producing a node N2 between the vibrators A and B and between the vibrators $\bar{A}$ and $\bar{B}$.

In the vibration mode B3, a negative phase drive voltage is applied to each of the vibrators A and B and a positive phase drive voltage is applied to each of the vibrators $\bar{A}$ and $\bar{B}$. As a result, a node N3 is produced in the central portion of each of the vibrators C and $\bar{C}$. In this way, the nodes are successively produced and the rotor is driven in 3/2 steps in response to formation of the successive nodes.

Figure 28 is a circuit diagram of a drive control circuit according to still another embodiment of the present invention. While the embodiments of Figures 21 and 25 give examples of 3/2 step driving, there are cases where the direction of driving is not fixed and the embodiment of Figure 28 is designed to establish the direction of driving. In Figure 28, the gate control circuit 109 includes a differentiator circuit 301, inverters 302 and 305, an AND circuit 303 and an OR circuit 304. The gate circuit 110 includes transmission gates 173, 175, 176 and 178.

Figure 29 is a timing chart showing the operation of the drive control circuit constructed as described above. The 1 Hz control signal $\phi 1$ is differentiated by the differentiator circuit 301 and the resulting differentiated signal $\underline{x}$ is applied, along with the step switching signal $\underline{l}$ to the AND circuit 303. If the step switching signal $\underline{l}$ is at the level H, the differentiated signal $\underline{x}$ applied to the AND circuit 303 is output as such. This output is inverted by the inverter 305 and applied as the gate control signal $\underline{p}$ to the transmission gates 173 and 176. When the gate control signal $\underline{p}$ is at the level L, no drive voltage is applied to each of the vibrators A and $\bar{A}$ at the time of the positive going transition of the 1 Hz control signal $\phi 1$.

Also, the step switching signal $\underline{l}$ is applied to the OR circuit 304 through the inverter 302, along with the output of the AND circuit 303, and during the time that the output of the AND circuit 303 remains at the level H the OR circuit 304 sends a gate control signal $\underline{s}$ to the transmission gates 175 and 178 such that the drive voltages are applied to the vibrators C and $\bar{C}$. As a result, the vibrators C and $\bar{C}$ are driven during a short period of time in which the vibrators A and $\bar{A}$ are not driven.

Figure 30A is a timing chart of the drive voltage phases in such a case, and Figure 30B is a diagram showing the positions of the nodes in such a case. For instance, in the vibration mode B1, while a positive phase drive voltage is applied to each of the vibrators A and B and a negative phase drive voltage is applied to the vibrators $\bar{A}$ and $\bar{B}$, no drive voltage is applied to the vibrators C and $\bar{C}$ and thus a node N1 is produced in the central portion of each of the vibrators C and $\bar{C}$.

Then, in a vibration mode B2', no drive voltage is applied to the vibrators A and $\bar{A}$ but a positive phase drive voltage is applied to the vibrators B and C and a negative phase drive voltage is applied to the vibrators $\bar{B}$ and $\bar{C}$, thereby producing a node N2' in the central portion of each of the vibrators A and $\bar{A}$. As a result, the rotor is moved from the position of the node N1 to the position of the node N2'. Then, in the vibration mode B2, no drive voltage is applied to the vibrators C and $\bar{C}$ but a positive phase drive voltage is applied to the vibrators B and $\bar{A}$ and a negative phase drive voltage is applied to the vibrators $\bar{B}$ and A, thereby producing a node N2 between the vibrators A and B and between the vibrators $\bar{A}$ and $\bar{B}$.

In this way, the vibration modes B1', B2', B3' etc. are respectively provided before the vibration modes B1, B2, B3 etc. so that an additional node is provided for a short period of time one half step before the next successive node and therefore the direction of rotation of the rotor is fixed.

While the above mentioned embodiments have been described as applied to 1/2 step (half step) or 3/2 step drive control, it is possible to realise a 5/2 step or 7/2 step drive control by increasing the number of vibrators and by suitably adjusting the number of the vibrators to which no drive voltage is applied and the time period during which no drive voltage is applied.

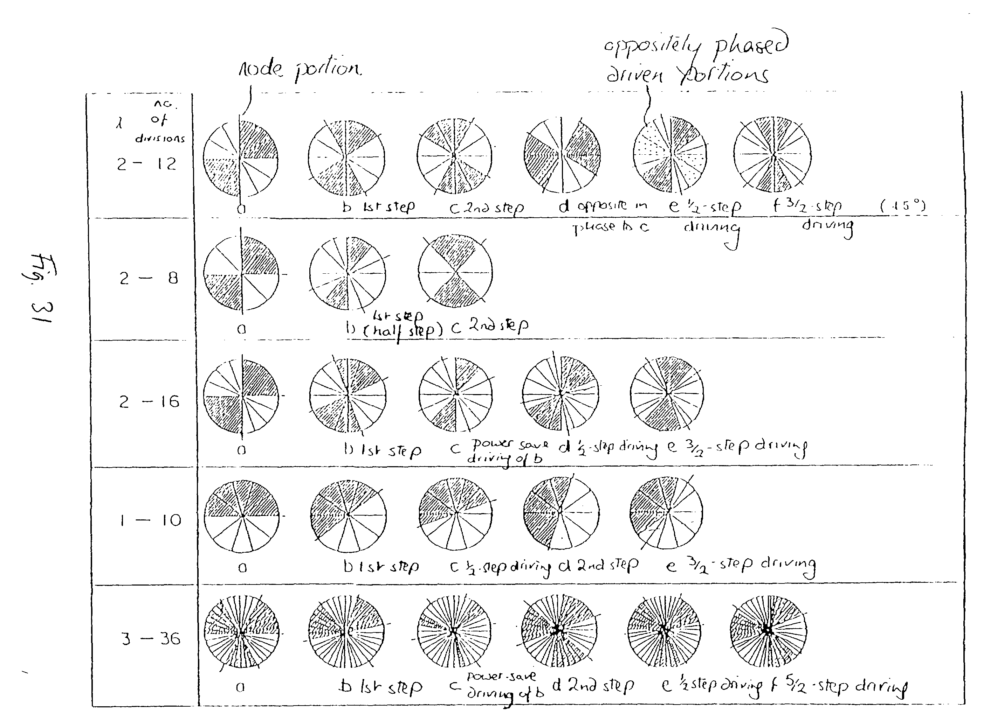

Figure 31 is a diagram illustrating stepping motors of different types. A stepping motor of any given type can be effected as shown in the Figure.

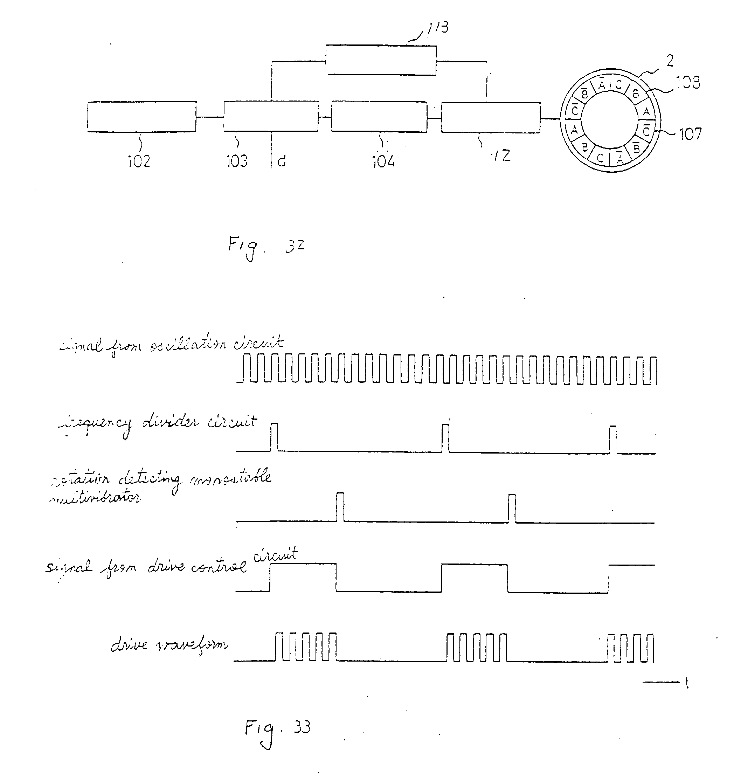

Figure 32 is a schematic block diagram of a drive control circuit according to still another embodiment of the present invention, and Figure 33 is a timing chart representing the operation of this embodiment. In Figure 32, circuits previously described are designated by the same reference numbers, and there are in addition a power save circuit 112, and an auxiliary control circuit 113.

In response to the application of the signal from the frequency divider circuit 102 (see Figure 1) and the oscillation signal $\underline{d}$ from the oscillation circuit 105, the control circuit 103 sends the control signals to the driver circuit 104. The driver circuit 104 applies the drive voltages to the vibrators 108 through the power save circuit 112. At this time, after the expiration of a given time from the positive going transition of the drive voltage or after a given degree of rotation has been confirmed in accordance with the output from an encoder (not shown), the auxiliary control circuit 113 closes gates of the power save circuit 112 thereby preventing the application of the drive voltages to the vibrating unit 107.

Since it is useless to apply the drive voltages after the rotor has moved to the position of a node, where the time required for the rotor to move one step is preliminarily known, as mentioned previously, and after the rotor has been driven for this time, or after the amount of movement has been detected by the encoder or the like thereby confirming a movement of one step, the application of the drive voltages are prevented whereby to reduce the driving power.

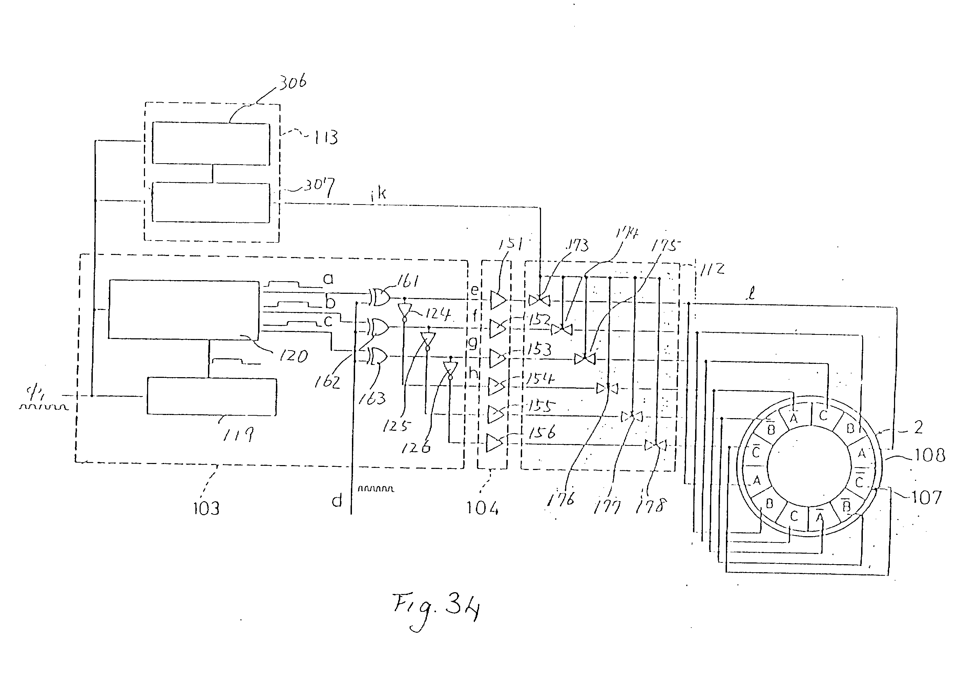

Figure 34 is a circuit diagram showing details of one example of the embodiment of Figure 32. The power save circuit 112 includes transmission gates 173 to 178. It is to be noted that while the power save circuit 112 is similar in construction to the previously mentioned gate circuit 110, it is referred to as a power save circuit for purposes of convenience. The auxiliary control circuit 113 includes a mono-stable multivibrator circuit 306 and a differentiator circuit 307 so as to provide on/off control of the transmission gates 173 to 178 of the power save circuit 112.

The present embodiment shows a circuit construction for one step (30°) per second driving of an ultrasonic stepping motor having a 2 $\lambda$ vibration mode of

twelve division steps per rotation.

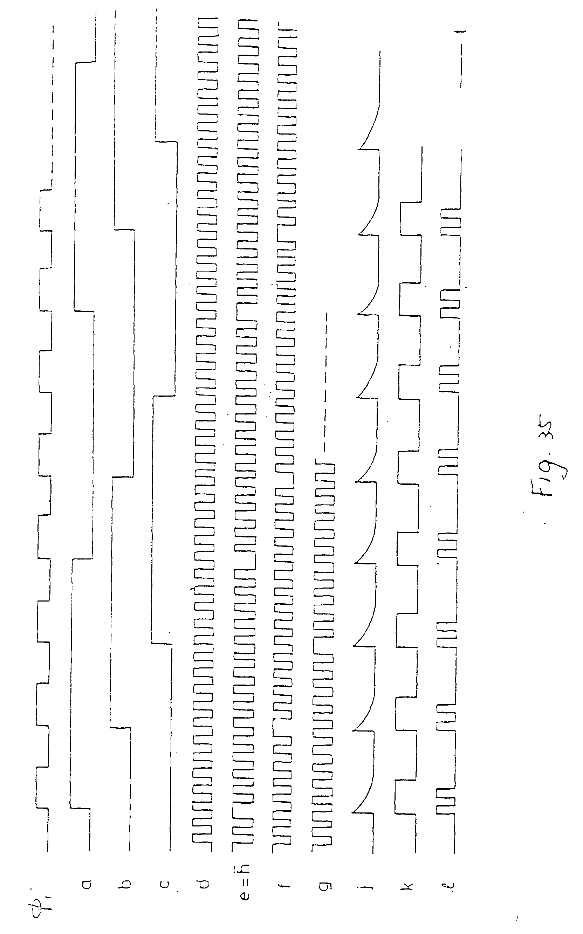

Figure 35 is a timing chart showing the operation of the drive control circuit constructed as described. The 1 Hz control signal $\phi 1$ from the frequency divider circuit 102 of Figure 1 is applied to the 1/6 frequency divider circuit 119 and the shift register 120, respectively, and the 1/6 frequency divided signal from the 1/6 frequency divider circuit 119 is supplied to the shift register 120. The shift register 120 generates the 1/6 Hz signals a, b and c which are shifted from each other by one second and which are each inverted in phase every three seconds. The signal a is applied, along with the oscillation signal d, to the exclusive OR circuit 161, its output signal e being applied to the buffer 151 of the driver circuit 104 and through the inverter 124 as the inverted signal h to the buffer 154. Similarly, the signals b and c are respectively subjected, along with the oscillation signal d, to exclusive OR operation in the exclusive OR circuits 162 and 163 and the resulting output signals f and g are respectively supplied directly and through the inverters 125 and 126 to the buffers 152, 153, 155 and 156 of the driver circuit 104.

On the other hand, the 1 Hz control signal $\phi 1$ is also supplied to the mono-stable multi-vibrator circuit 306 so that each time a pulse of the control signal $\phi 1$ is applied, the mono-stable multi-vibrator circuit 306 generates and applies a given pulse signal to the differentiator circuit 307 which in turn applies a gate control signal k of a given time duration to the power save circuit 112. As a result of the open control of the power save circuit 112, the drive voltages from the driver circuit 104 are successively applied to the vibrators 108 of the stator 2 and the rotor 1 is moved one step. Then, upon expiration of the given time duration, the gate control signal k goes to the level L so that the gates of the power save circuit 112 are closed and the drive voltages from the driver circuit 104 are cut off. Then, in order to move the rotor one step again, the above mentioned operation is repeated.

Figure 36 is a block diagram of a drive control circuit according to still another embodiment of the present invention, which is designed so that the application of the drive voltages is stopped after a given rotation of the rotor has been detected. In Figure 36, rotation detecting means 114 are provided for detecting the rotation of the rotor. The auxiliary control circuit 113 sends a gate signal for opening the gates of the power save circuit 112 during the interval from the positive going transition of the control signal from the control circuit 103 until the supply of a given signal from the rotation detecting means 114. Thus, after the rotor has been moved one step, the drive voltages are no longer applied.

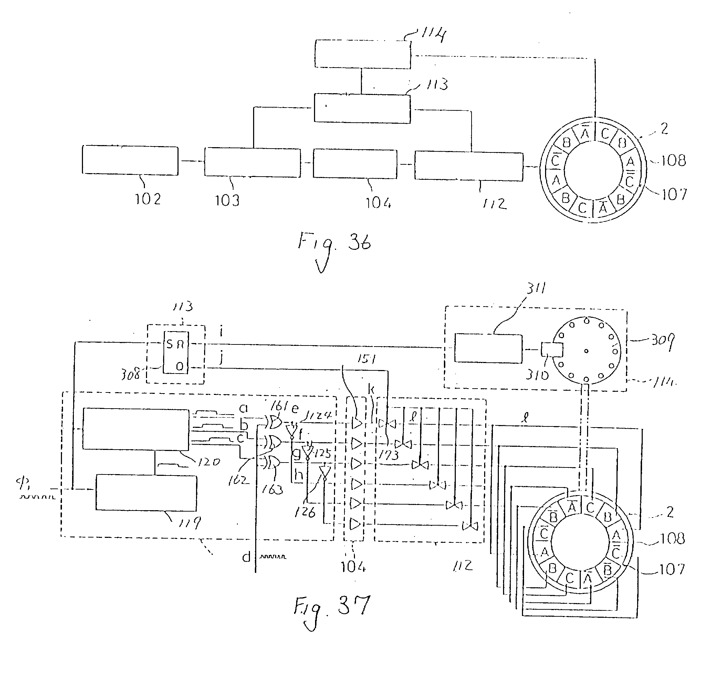

Figure 37 is a circuit diagram showing details of one example of the embodiment of Figure 36. The auxiliary control circuit 113 includes a flip flop circuit 308, and the rotation detecting means 114 includes a disk 309 mechanically coupled to the rotor, a light emitter/receiver 310 and a decoder 311.

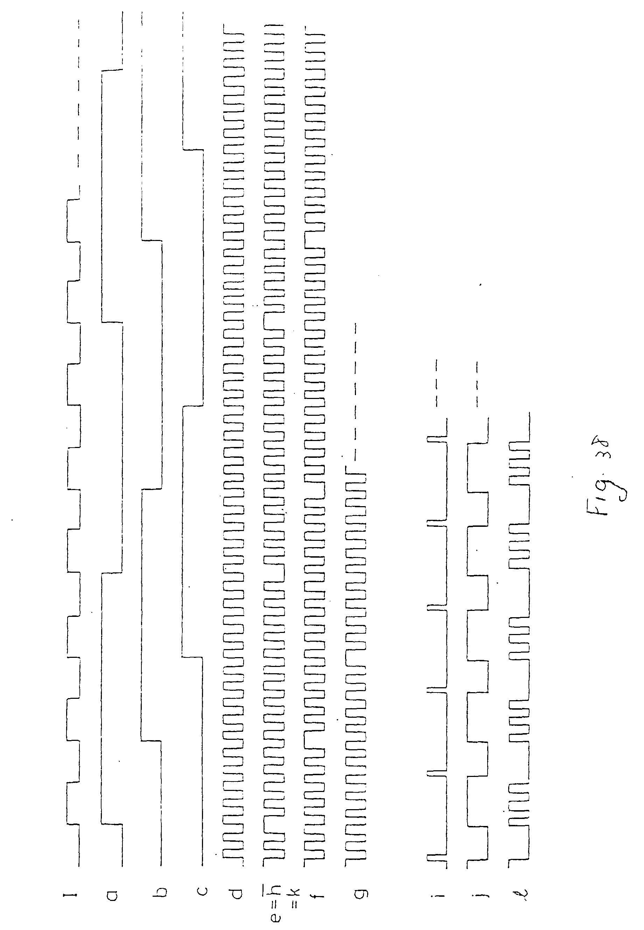

Figure 38 is a timing chart representing the operation of the circuit of Figure 37. The control signal $\phi 1$ is applied to the set terminal of the flip flop circuit 308 so that it is set every second and its output signal j goes to the level H, thereby opening the gates of the power save circuit 112. In a like manner as in the previously mentioned embodiment, therefore, the drive voltages are applied to the vibrators 108 thereby producing nodes. Then, as the rotor is moved towards the nodes, thus making a single stepping movement, the disk 309 is rotated in response to the stepping movement and the light emitter/receiver 310 detects the rotation of the disk 309.

The output of the light emitter/receiver 310 is applied to the re-set terminal of the flip flop circuit 308 through the decoder 311 to change the output signal j from the level H to the level L. Thus, the gates of the power save circuit 112 are closed and the application of the drive voltages is prevented. For instance, the output k of the buffer 151 is applied to the vibrator A only when the transmission gate 173 is open, that is when the signal j is at the level H and a drive voltage r is applied to the vibrators A as shown in the Figure.

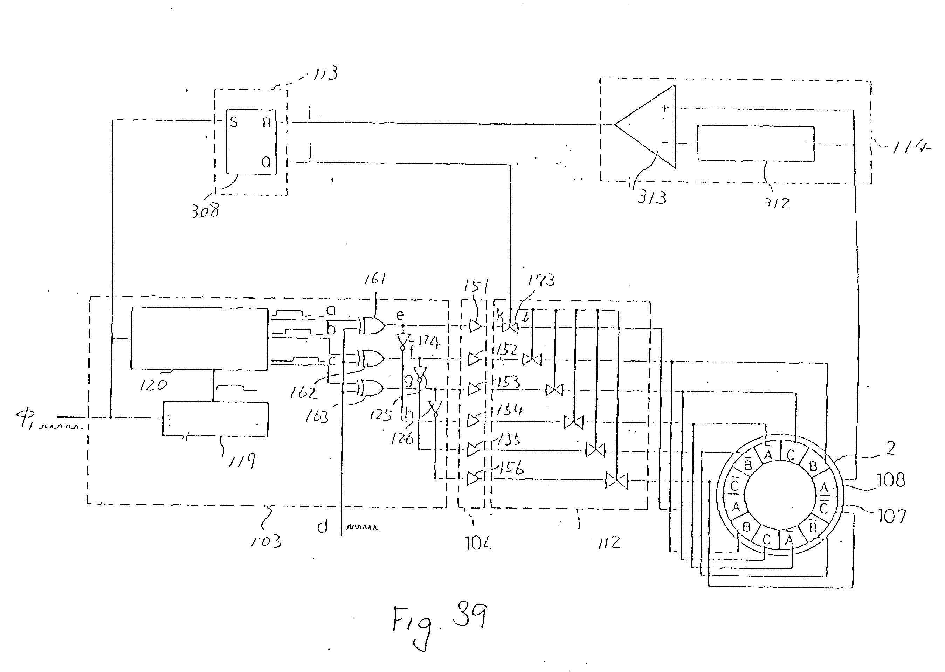

Figure 39 is a circuit diagram showing details of another example of the embodiment of Figure 36. This embodiment is so designed that when the induced voltage in one vibrator reaches a given voltage, it is considered that one stepping movement has been made and the driving is stopped. The rotation detecting means 114 includes a comparison voltage setting circuit 312 and a comparator 313.

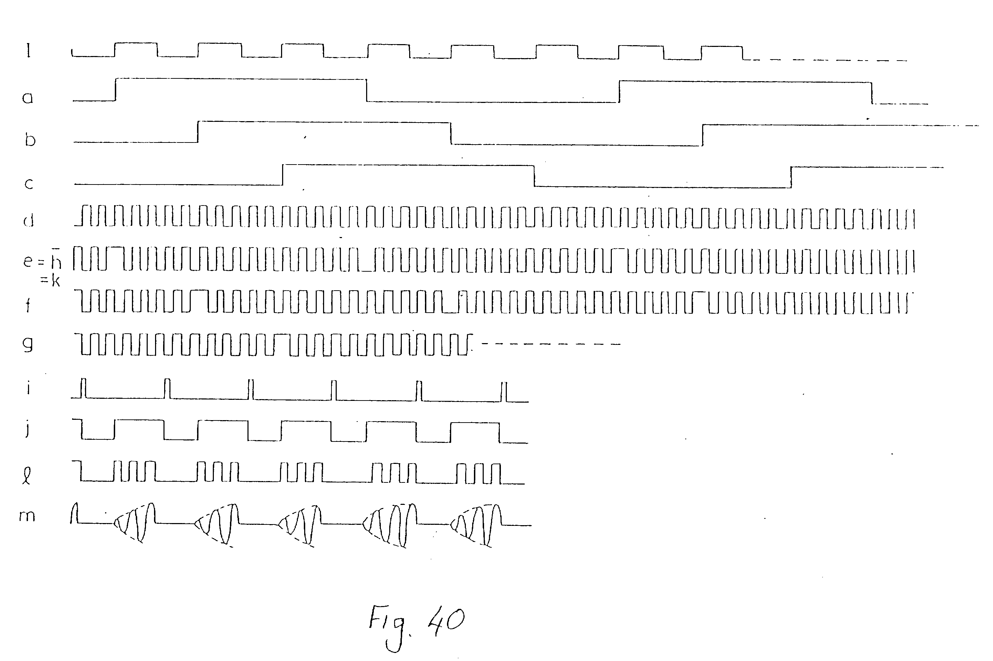

Figure 40 is a timing chart representing the operation of the circuit of Figure 39. While the operation of this embodiment is basically the same as the embodiment of Figure 37, the present embodiment is designed to note the production of an induced voltage in each vibrator upon vibration thereof. The induced voltage m of the vibrator A, for example, is thus detected and the induced voltage m is compared with the pre-set voltage of the comparison voltage setting circuit 312 by the comparator 313. If the induced voltage m is greater, a re-set signal i is applied to the re-set terminal of the flip flop circuit 308 so that its output signal j goes to the level L and the gates of the power save circuit 112 are closed. Thus, the drive voltages are no longer applied to the vibrators 108.

It is to be noted that the induced voltage level is unstable and low during the movement of the rotor and it increases and stabilises as the rotor comes near to the desired position. Therefore, the rotation detecting means 114 may be constructed so as to sample and hold the just preceding induced voltage and compare it with the new level to thereby detect the rotation.

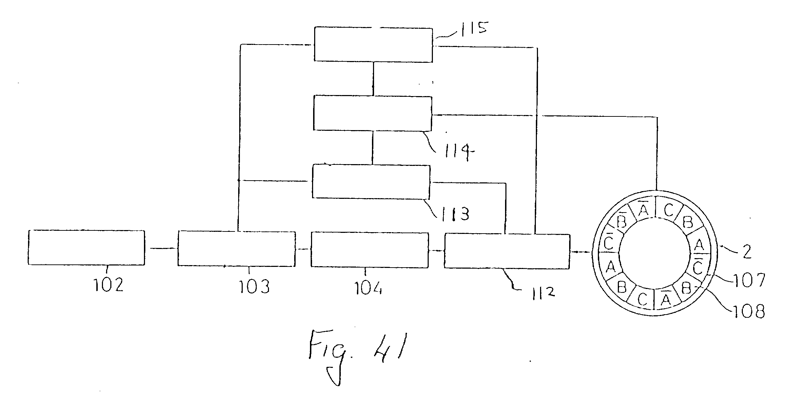

Figure 41 is a block diagram showing a drive control circuit according to still another embodiment of the invention. This embodiment differs from the embodiment of Figure 32 in that a detection control circuit 115 is added, whereby if the given rotation has not been confirmed even after the expiration of a given time, the vibrator employed for rotation detection is utilised as a full driving vibrator.

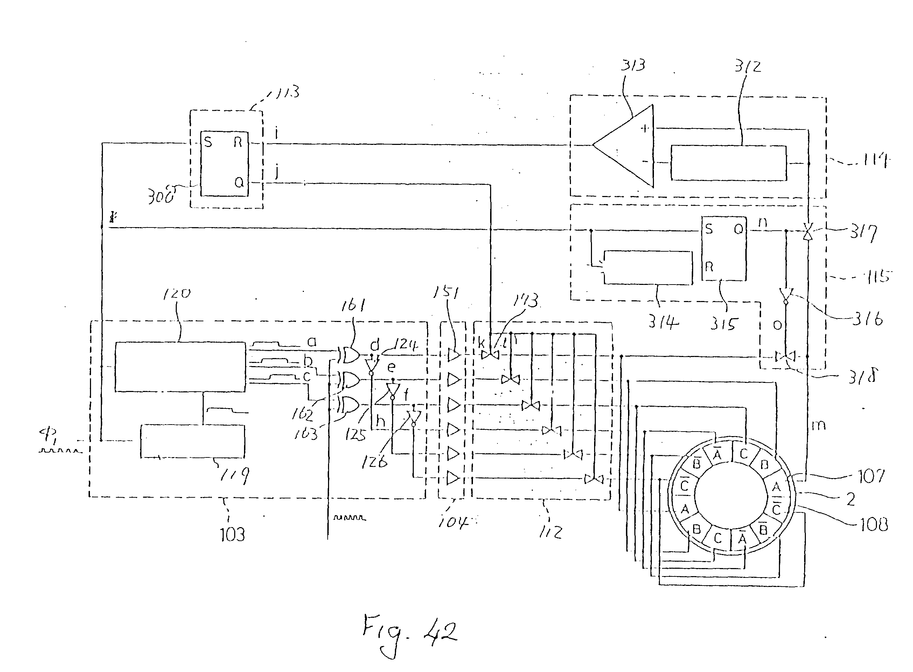

Figure 42 is a circuit diagram showing details of one example of the embodiment of Figure 41. The detection control circuit 115 includes a timer circuit 314, a flip flop circuit 315, an inverter 316 and transmission gates 317 and 318.

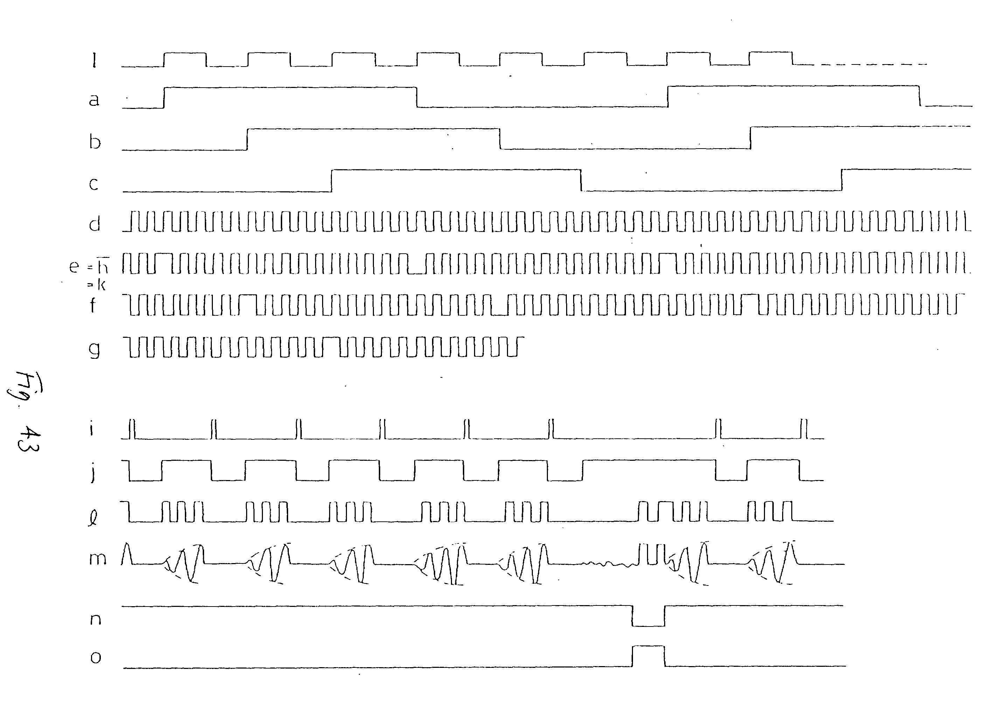

Figure 43 is a timing chart representing the operation of the embodiment of Figure 42. While the steady state operation of this embodiment is the same as the embodiment of Figure 39, when the timer circuit 314 comes into operation, that is when the given time period has expired, the operation of the embodiment is as follows.

The flip flop circuit 315 is set each time a pulse of the control signal $\phi 1$ is applied, and its output signal n goes to the level H. This signal n is directly supplied as a gate signal to the transmission gate 317 so that the gate 317 is opened and is supplied through the inverter 316 as a gate signal o to the transmission gate 318, which in turn is closed. As a result, no drive voltage is applied to the vibrator A and the induced voltage m of the vibrator A is supplied to the rotation detecting means 114, thereby functioning in the same way as the embodiment of Figure 39. When the set time of the timer circuit 314 is up, however, the flip flop circuit 315 is re-set and its output signal n goes to the level L. Thus, the transmission gate 317 is closed and the transmission gate 318 is opened, with the result that the drive voltage from the buffer 151 is applied to the vibrator A and the drive voltages are applied to all the vibrators thereby effecting full power driving.

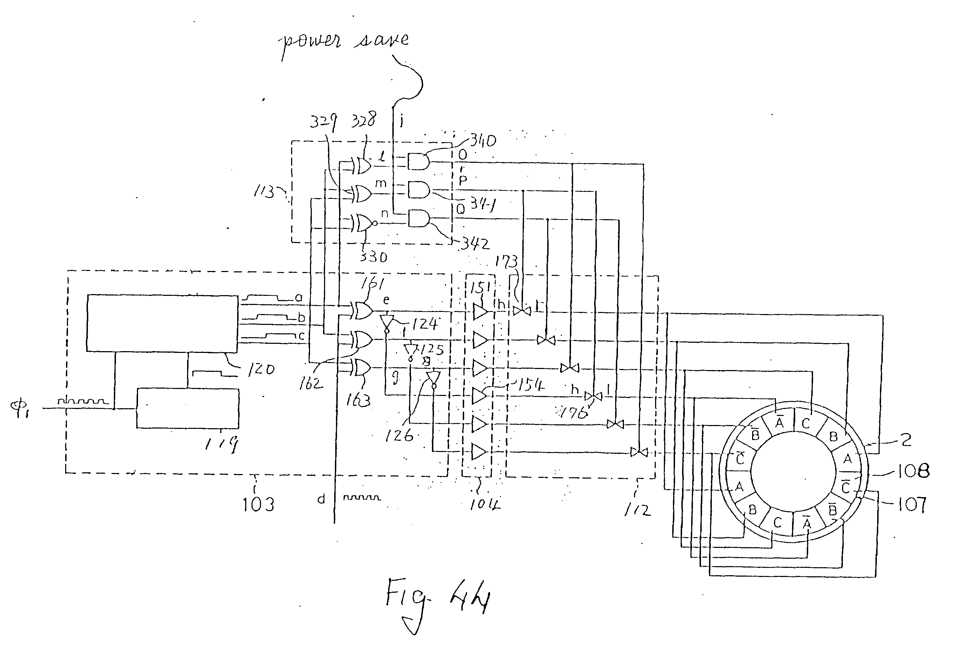

Figure 44 is a circuit diagram of a drive control circuit according to still another embodiment of the present invention. This embodiment is designed so that driving of the vibrators during anti-nodes of the vibration mode is prevented so as to ensure low power driving. The auxiliary control circuit 113 includes exclusive OR circuits 328 and 329, an exclusive NOR circuit 330 and AND gates 340 to 342.

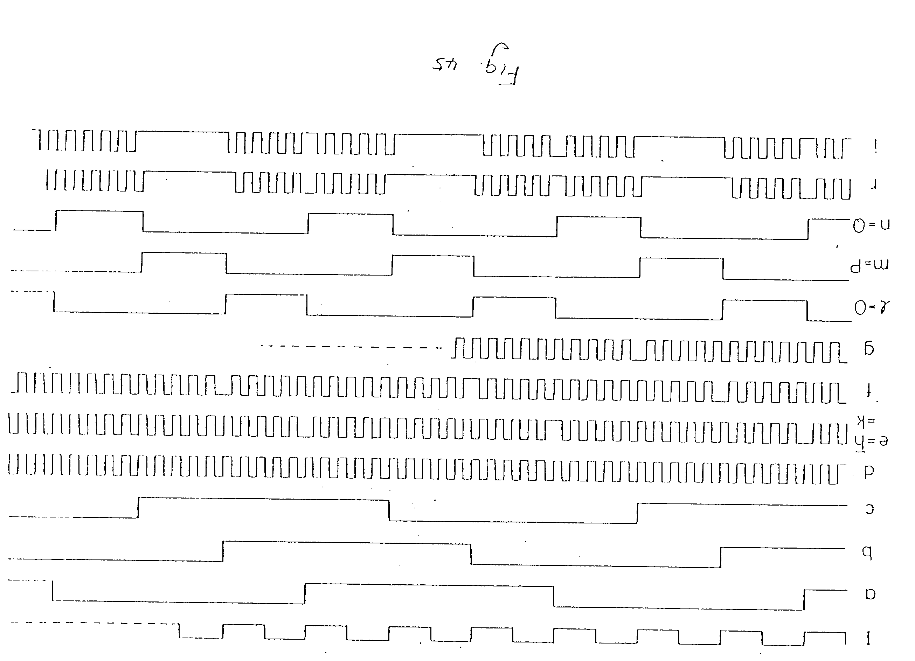

Figure 45 is a timing chart representing the operation of the embodiment of Figure 44. For instance, the exclusive OR circuit 329 of the auxiliary control circuit 113 receives the signals b and c and applies its output signal m to the AND circuit 341. When the power save signal j goes to the level H, the output signal m is supplied as a gate control signal to the transmission gates 173 and 176 and drive voltages r and i are generated as shown in the Figure. The central portions of the drive voltages r and i or the portions corresponding to the anti-node portions of the vibration mode are missing and thus no drive voltages are then applied to the vibrators A and $\overline{A}$. The same applies with the other vibrators B, $\overline{B}$, C and $\overline{C}$.

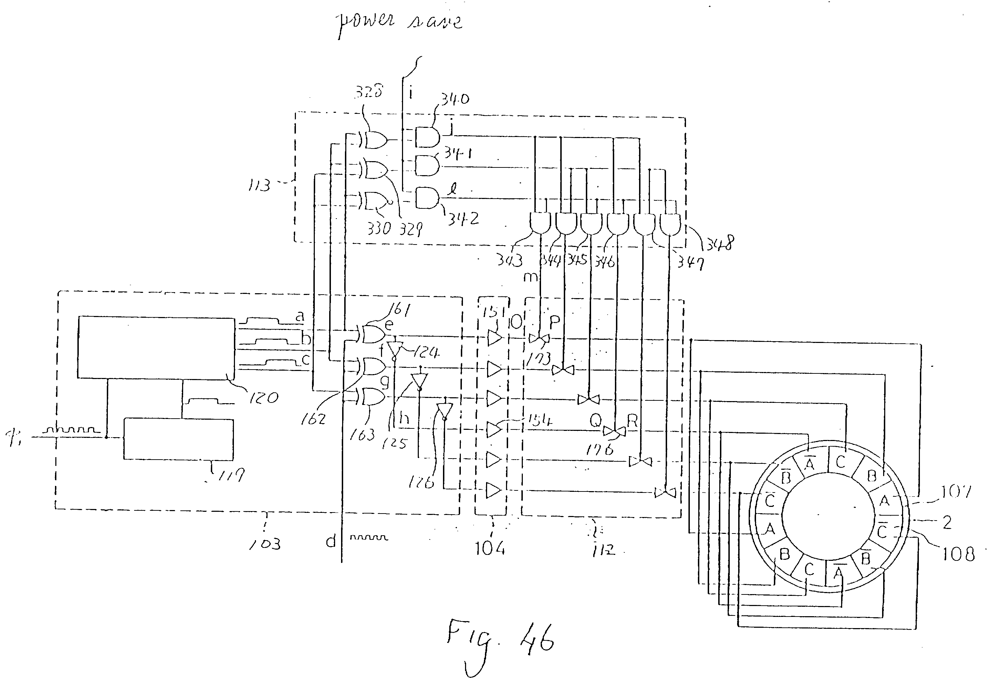

Figure 46 is a circuit diagram of a drive control circuit according to still another embodiment of the present invention. This embodiment differs from the embodiment of Figure 44 in that the drive voltages are applied only in the anti-node portions of each vibration mode. The drive control circuit 113 is constructed by adding AND gates 343 to 348 to the auxiliary control circuit 113 in the embodiment of Figure 44.

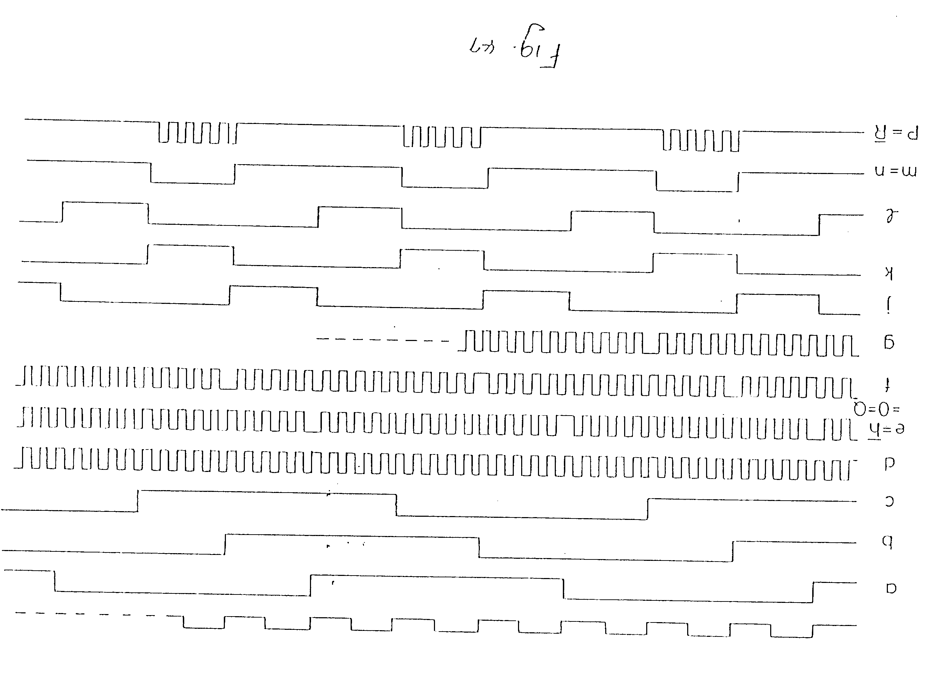

Figure 47 is a timing chart representing the operation of the embodiment of Figure 46. The AND circuit 343, for example, receives the output j of the AND circuit 340 and the output l of the AND circuit 342. Then, its output signal m is supplied as a gate control signal to the transmission gate 173. At this time, the gate control signal m corresponds to the central portion of the signal a as shown in the Figure and it also corresponds to the position of the anti-node of the vibration mode. The drive voltage from the buffer 151 is thus applied to vibrators A at times corresponding to the positions of the anti-nodes of the vibration mode. In the case of the vibrators $\overline{A}$, the timing of application of the drive voltage is also the same. In the same manner, the drive voltages applied to each of the vibrators B, $\overline{B}$, C and $\overline{C}$ at the- time corresponding to the position of the anti-node of the vibration mode.

Each of the embodiments of Figures 44 and 46 is designed so as selectively to stop the driving of the vibrators and thereby to reduce the current level. The output torque and the current consumption are still increased in proportion to the number of vibrators driven. As a result, while the driving positions for providing the desired vibration mode are limited as mentioned previously, the number of vibrators needed for providing the vibration mode can be varied even if the number of vibrators to be driven is a minimum of one, and there is no limitation to this number. For instance, as regards the vibration mode produced when the respective vibrators A, B and C and $\overline{A}$, $\overline{B}$ and $\overline{C}$ are driven in pairs but in reverse phase relation, while it is is possible to drive the respective pairs of the vibrators A and C and $\overline{A}$ and $\overline{C}$ at one time as in the embodiment of Figure 44 or to drive the respective pairs of the vibrators B and B and $\overline{B}$ and $\overline{B}$ at one time, the same vibration mode can be produced even if the vibrators are driven singly, e. g. when the vibrators A and C are driven singly or the vibrator B alone is driven. Also, the same applies even to the combination of the vibrators A and B singly and the pair of vibrators $\overline{B}$. Further, the same effect can be obtained by driving the vibrators A, B and C singly or in pairs. As a result, a large number of combinations of the driven ones and the non-driven ones is conceivable and the present invention is not limited to the previously mentioned embodiments.

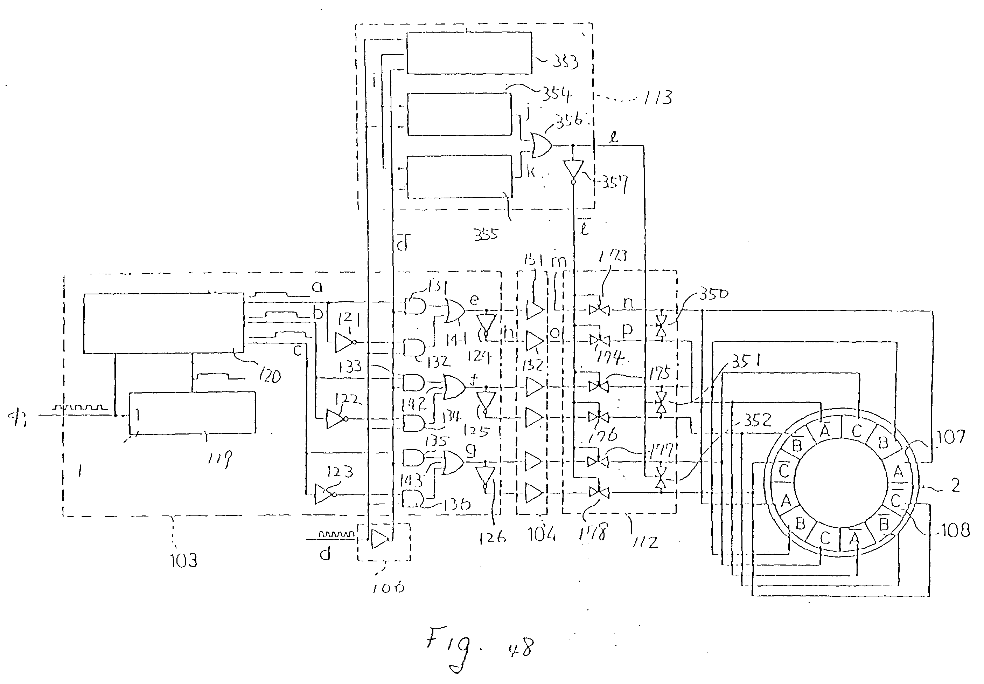

Figure 48 is a circuit diagram of a drive control circuit according to still another embodiment of the present invention. This embodiment differs from the previous embodiments in that respective vibrators which are opposite in phase to each other are short circuited to transfer their charges at the time of reversing the phases of the drive voltages applied to the vibrators, thereby to save power. The control circuit 103 is identical in construction with the counterpart circuit in the embodiment of Figure 16.

The power save circuit 112 includes transmission gates 173 to 178 and 350 to 352. The drive control circuit 113 includes a mono-stable multi-vibrator circuit 353, differentiator circuits 354 and 355, an OR gate 356 and an inverter 357.

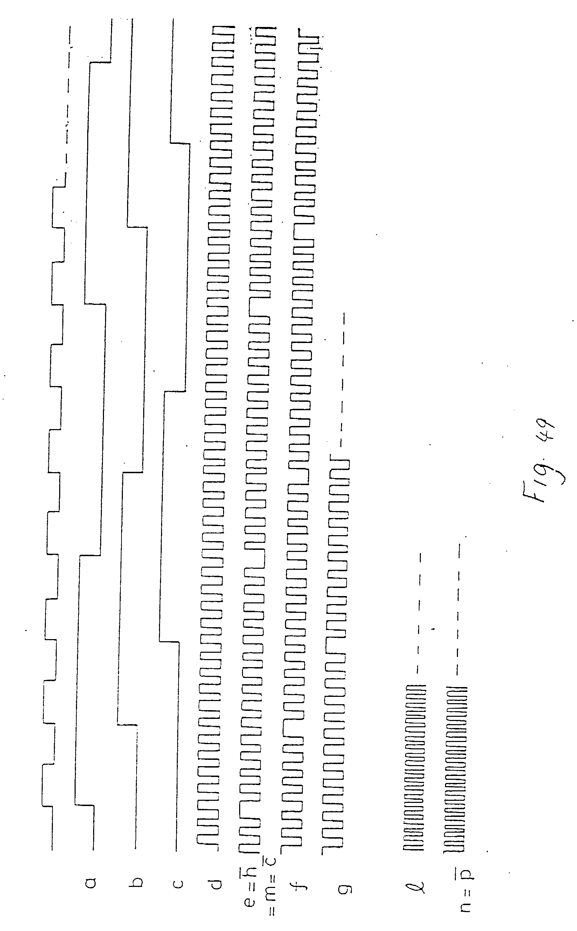

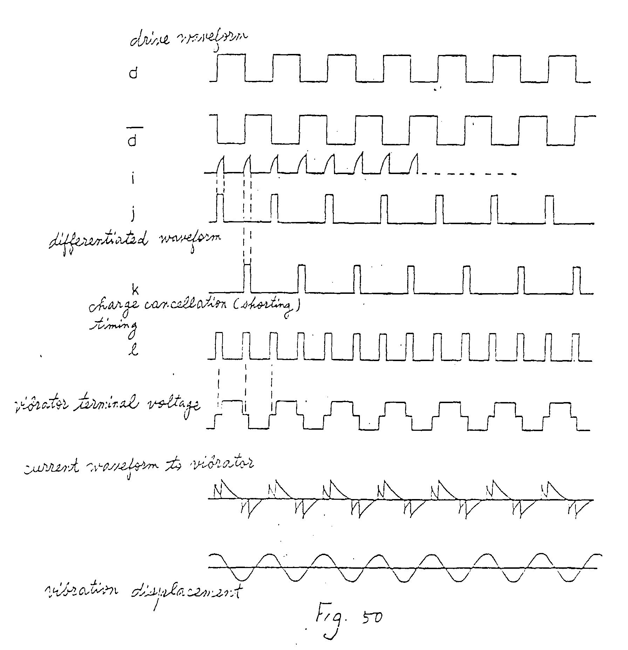

Figure 49 and 50 are timing charts representing the operation of the embodiment of Figure 48. The control circuit 103 receives the control signal ϕ1 and the oscillation signal d serves to generate phase controlled drive control signals e, f, g, h ... in a manner previously described. On the other hand, the mono-stable multi-vibrator circuit 353 of the drive control circuit 113 receives the oscillation signal d and the output signal d̄ of the phase inverting circuit 106 and applies pulse signals i corresponding to the input signals to the differentiator circuits 354 and 355. The oscillation signal d is also applied to the differentiator circuit 354 to generate a differentiated signal j, and the inverted signal d̄ is applied to the differentiator circuit 355 to generate a differentiated signal k.

These signals j and k are applied to the OR gate 356 which in turn generates a gate control signal l. The gate control signal l is provided at a timing corresponding to the leading edge and the falling edge of the oscillation signal d. The gate control signal l is applied as a gate control signal to the transmission gates 350 to 352 so that, for example, the vibrators A and Ā, B and B̄ and C and C̄ are respectively short circuited and their charges are transferred.

On the other hand, the gate control signal l is supplied as a gate control signal to the transmission gates 173 to 178 through the inverter 357 so that, when the previously mentioned short circuiting takes place, the transmission gates 173 to 178 are closed and the drive voltages from the driver circuit 104 are not supplied.

Then, when the above mentioned short circuiting period expires, the gate control signal l changes its state so that the above mentioned operations of the gates are reversed and now the drive voltages are applied to the vibrators. Thus, the terminal voltages, current wave forms and vibration displacements of the vibrators become as shown in Figure 50.

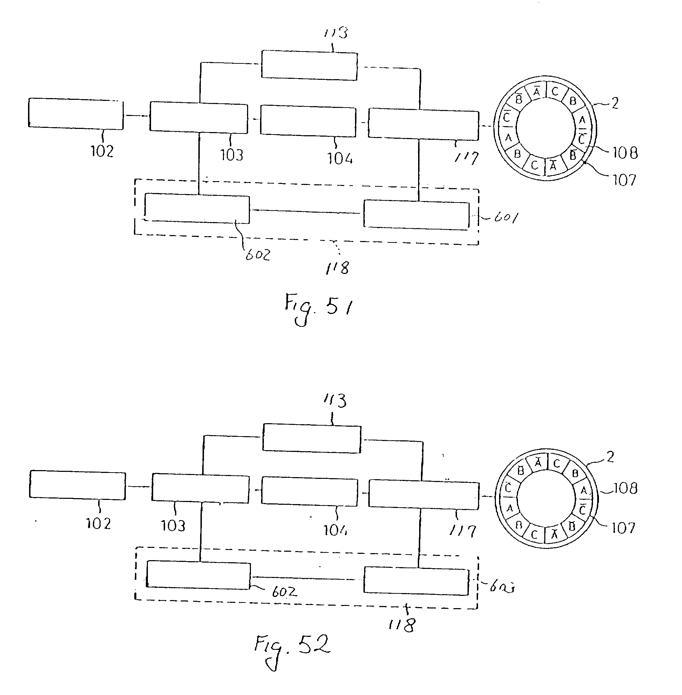

Figure 51 is a block diagram of a drive control circuit according to still another embodiment of the present invention. In this embodiment, a driving/detection switching circuit 117 and a frequency follow up arrangement 118 are provided. The frequency follow up arrangement 118 includes an induced voltage comparison circuit 601 and a frequency follow up circuit 602. In this embodiment, switching between the application of the drive voltage to one of the vibrators 108 and the detection of the induced voltage in that vibrator 108 is effected by the driving/detection switching circuit 117, and the induced voltage is compared with a given reference voltage in the induced voltage comparison circuit 601. Then, the oscillation frequency of the frequency follow up circuit 602 is controlled in accordance with the result of the comparison. In other words, since the induced voltage is increased in the resonant condition, the oscillation frequency or the frequency of the drive voltages is adjusted in such a manner that the induced voltage is increased to the maximum level.

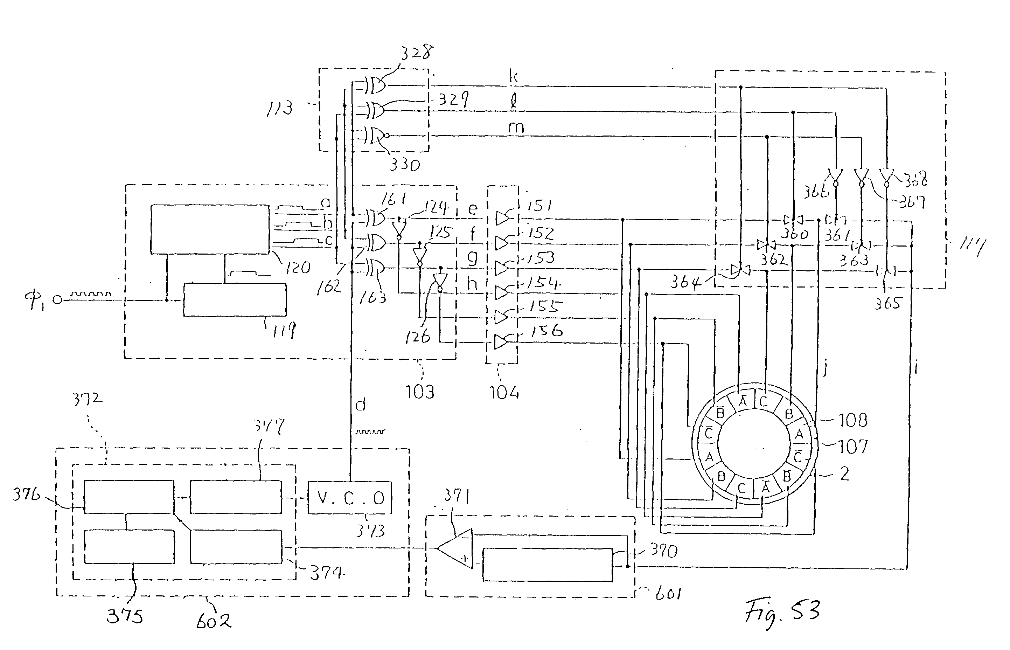

Figure 52 is a block diagram of a modified drive control circuit. In this embodiment, the frequency follow up arrangement 118 comprises a phase comparison circuit 603 and a frequency follow up circuit 602. The oscillation frequency or the frequency of the drive voltage is adjusted such that the phase difference between the drive voltage and the induced voltage is detected so as to obtain the resonant condition, the phase difference being 90° in the resonant condition.

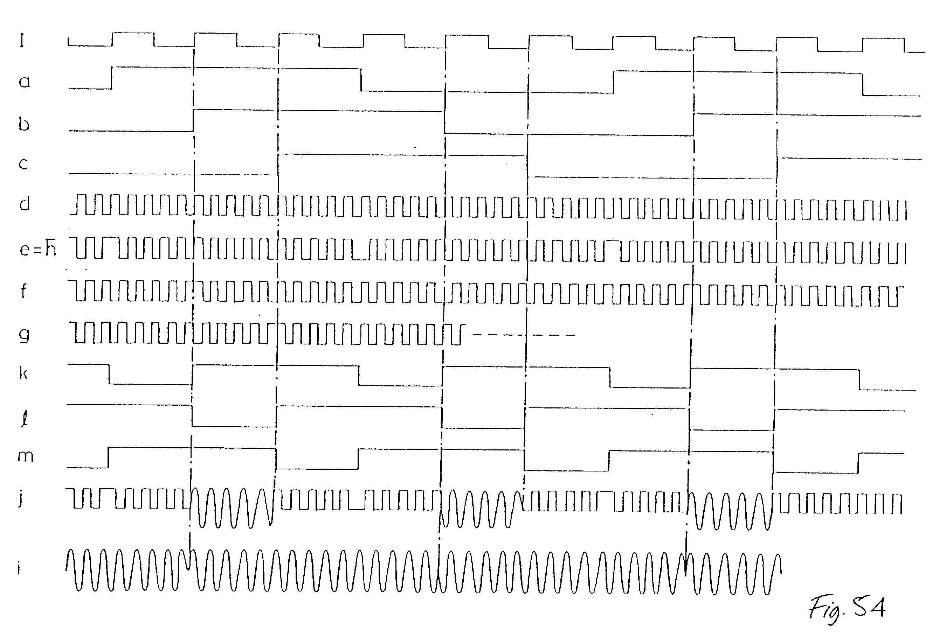

Figure 53 is a circuit diagram showing details of one example of the circuit of Figure 51. The driving/detection switching circuit 117 includes transmission gates 360 to 365 and inverters 366 to 368 arranged as shown. A drive control circuit 113 includes exclusive OR circuits 328 and 329 and an exclusive NOR circuit 330. The induced voltage comparison circuit 601 includes a comparison voltage setting circuit 370 and a subtractor 371. The comparison voltage setting circuit 370 is adapted sequentially to store the peak voltage of the preceding period. The frequency follow up circuit 602 includes a control voltage generating circuit 372 and an oscillator 373. The control voltage generating circuit 372 includes an amplifier circuit 374, an oscillator 375, a counter 376 and a D/A converter 377.

This embodiment shows an example of the circuit adapted for one step (30°) per second driving of an ultrasonic stepping motor having a 2 λ vibration mode of twelve division steps per rotation.

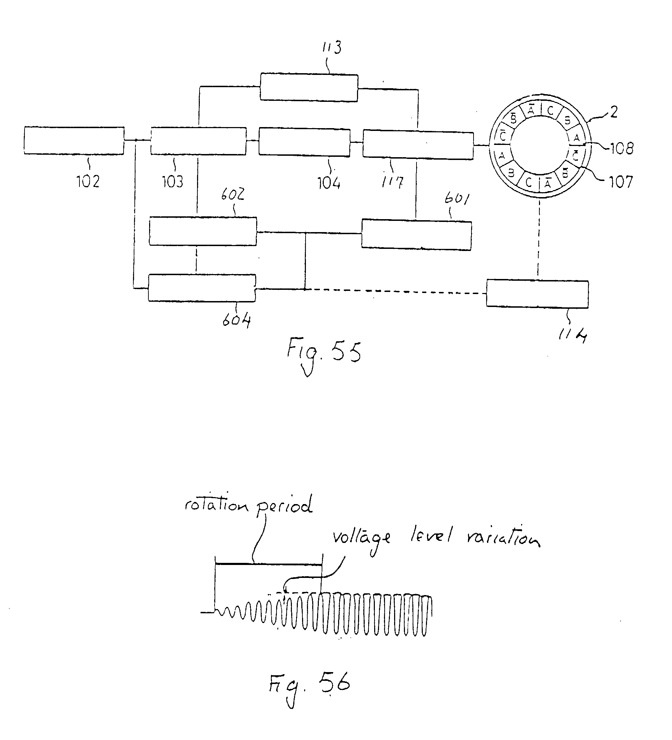

Figure 54 is a timing chart, representing the operation of the drive control circuit of Figure 53.

The drive control circuit 113 receives the output signals a, b and c of the shift register 120 so as respectively to generate signals k, l and m. The signals k, l and m are respectively applied as gate signals directly to the transmission gates 364, 360 and 362, and are also respectively applied as gate signals to the transmission gates 365, 361 and 363 through the inverters 368, 366 and 367. As shown in the Figure, each of the signals k, l and m goes to the level H for two seconds and then goes to the level L for one second. During the first two seconds, the transmission gates 360, 362 and 364 are opened and the drive voltages are applied to the vibrators 108 causing them to vibrate and, during the last one second, the transmission gates 361, 363 and 365 are opened to permit the detection of the induced voltages due to the vibrations. The induced voltages are detected in the anti-node portion of the vibration mode, as may be seen for example from the terminal voltage j of the vibrator A, wherein the induced voltage is detected in the central portion of the signal a.

The induced voltage comparison circuit 601 determines by means of the subtractor 371 the difference between the peak voltage of the preceding period and the induced voltage resulting from the opening of the transmission gates 361, 363 and 365, a different signal being sent to the frequency follow up circuit 602.

The difference signal is amplified by the amplifier circuit 374 and applied to the counter 376. The counter 376 counts the oscillation signals from the oscillator 375 so that, when the induced voltage becomes a maximum and the difference signal is reduced to 0, the counter 376 stops its counting. The output of the counter 376 is converted to an analog signal by the D/A converter 377 and then supplied as a control signal to the oscillator 373, which in turn produces an oscillation signal d of an oscillation frequency corresponding to the control signal. As a result, the oscillation signal d will drive voltages of the resonant frequency are applied to the vibrators 108 thereby vibrating them efficiently.

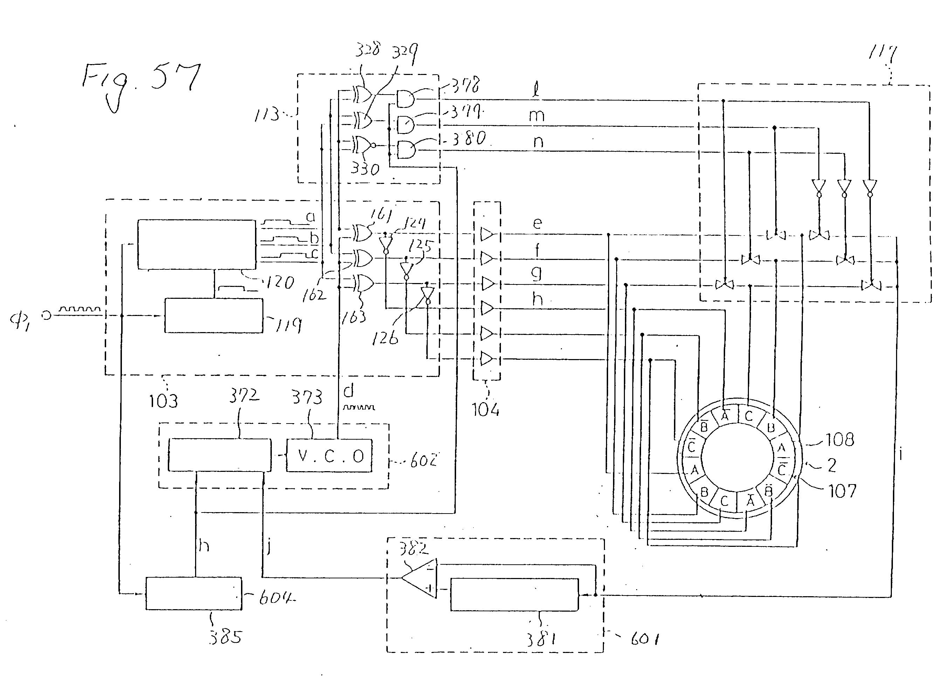

Figure 55 is a circuit diagram showing the construction of a drive control circuit for an ultrasonic stepping motor according to still another embodiment of the present invention. This embodiment differs from the previous embodiment in that, since the induced voltages of the vibrators vary in level during rotation, the completion of the rotation is first detected by rotation detecting means, e.g. an encoder, and then the required frequency follow up is initiated.

In Figure 55, the rotation detecting means 114 is connected mechanically to the rotor. In response to the output of the rotation detecting means 114, a driving follow up control circuit 604 starts the operation of the frequency follow up circuit 602.

Figure 56 is a timing chart of the induced voltage in the vibrator 108. When the rotation is started, the generation of an induced voltage commences and, after the rotor has rotated one step, the induced voltage varies no longer and remains constant. As a result, after confirming in accordance with the output of the rotation detecting means 114 that the rotor has moved one step, the driving follow up control circuit 604 drives the frequency follow up circuit 602. After the operation of the frequency follow up circuit 602 has been started, the respective circuits operate in the same manner as in the embodiment of Figure 53.

Figure 57 is a circuit diagram showing the construction of a drive control circuit for a surface driven stepping motor according to another modification of the circuit of Figure 53. This embodiment differs from the previous embodiment in that the frequency follow up circuit 602 is driven at intervals of a given time period. In Figure 57, a timer circuit 385 forms the driving follow up control circuit 604 and it receives the control signal $\phi 1$ such that the frequency follow up operation is effected at intervals of the given time period. Also, the drive control circuit 113 includes AND gates 378 to 380 in addition to the part shown in Figure 53 and they receive as a gate signal the output of the timer circuit 385.

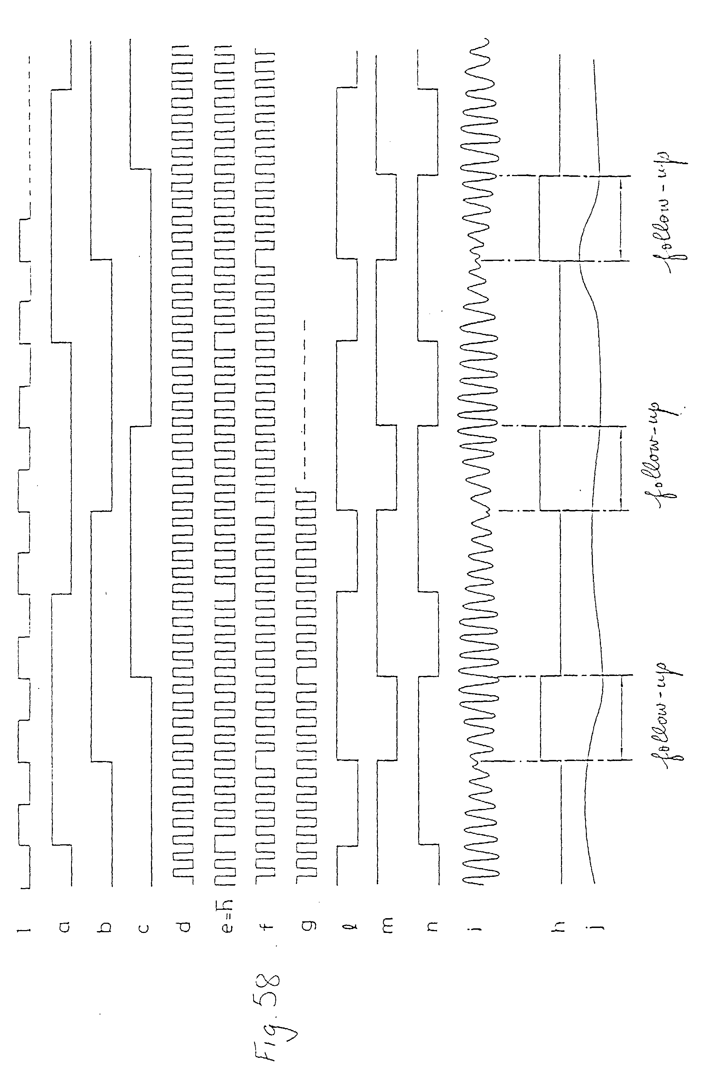

Figure 58 is a timing chart representing the operation of the circuit of Figure 57. The control signal $\phi 1$ is employed so that the frequency follow up apparatus 602 is driven at intervals of a given time period, that is during one second of every three seconds or one step of every three steps in this embodiment, for effecting the frequency follow up. When the output signal j of the induced voltage comparison circuit 601 deviates from the resonant point, the induced voltage is reduced and the difference between it and the comparison voltage is increased. The control voltage generating circuit 372 controls the oscillator 373 so as to reduce the difference to zero.

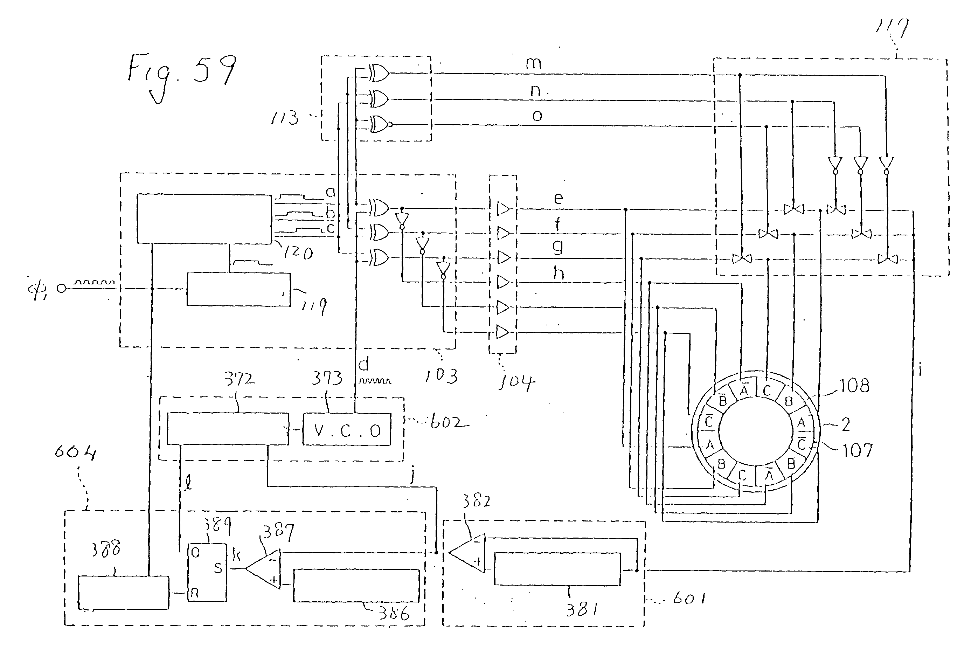

Figure 59 is a circuit diagram showing a further modification of a drive control circuit for an ultra-sonic stepping motor according to the present invention. This embodiment differs from the previous embodiment in that, when the difference between the induced voltage of the preceding period and the new induced voltage is reduced, it is determined that the rotor has moved one step and the control voltage generating circuit 372 is driven.

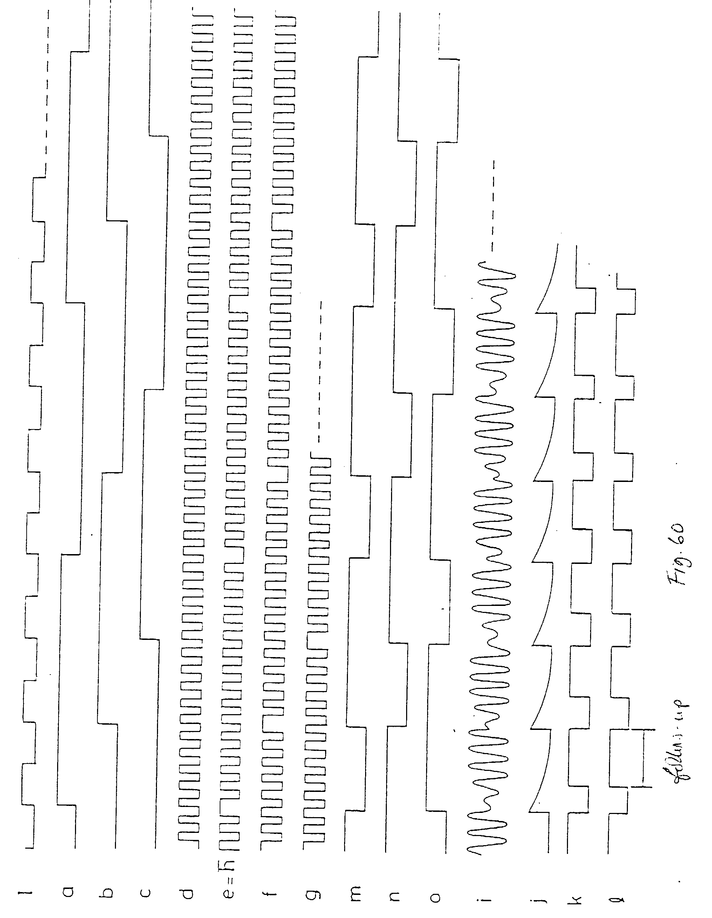

In Figure 59, the driving follow up control circuit 604 includes a reference voltage setting circuit 386, a comparator circuit 387, a differentiator circuit 388 and a flip flop circuit 389. Figure 60 is a timing chart representing the operation of the embodiment of Figure 59. The differentiator circuit 388 receives the control signal $\phi 1$ and its differentiated signal is applied to the re-set terminal of the flip flop circuit 389 thereby re-setting its output. The comparator 387 compares the output of the induced voltage comparison circuit 601 and a pre-set voltage of the reference voltage setting circuit 386 so that if the latter is greater, a set signal k is applied to the set terminal of the flip flop circuit 389.

When this occurs, the output of the flip flop circuit 389 goes to the level H and a drive signal 1 is applied to the control voltage generating circuit 372, so that the control voltage generating circuit 372 starts its follow up operation. The output signal j of the induced voltage comparison circuit 601 is applied as a control signal to the control voltage generating circuit 372 and the oscillation frequency of the oscillator 373 is controlled in accordance with the applied control signal.

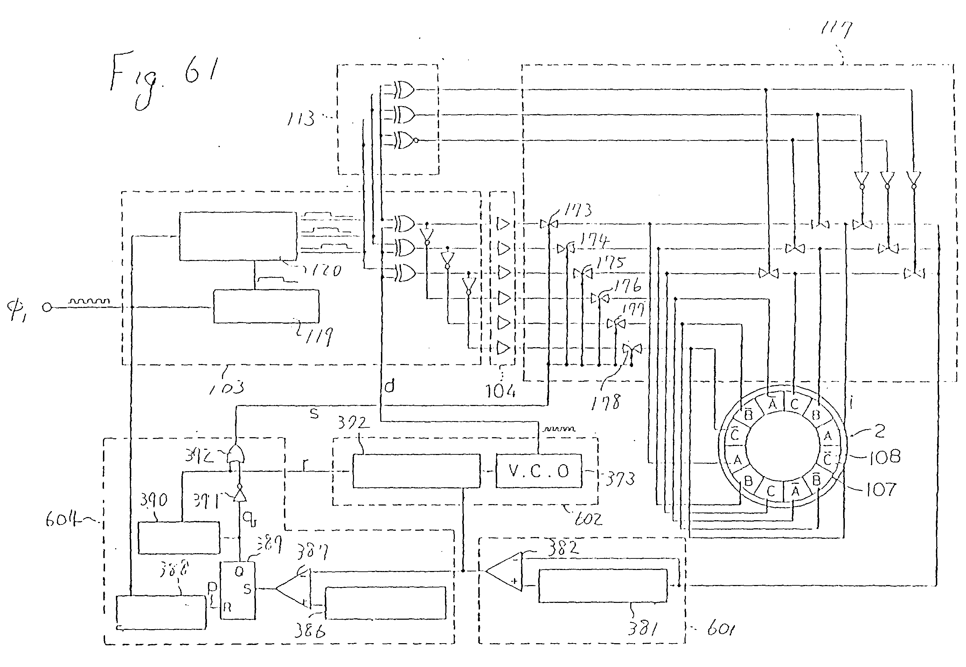

Figure 61 is a circuit diagram showing another modified drive control circuit. This embodiment differs from the previous embodiment in that, when it is determined that the rotor has moved one step, the application of the drive voltages is stopped and in that the frequency follow up is effected at a suitable period. The driving follow up control circuit 604 includes a reference voltage generating circuit 386, a comparator 387, a differentiator circuit 388 and a flip flop circuit 389 as well as a counting circuit 390, an inverter 391 and an OR gate 392.

The differentiator circuit 388 receives the control signal $\phi 1$, differentiates it, and the resulting differentiated output p is applied to the reset terminal of the flip flop circuit 389. When this occurs, the output of the flip flop circuit 389 goes to the level L and a gate control signal s is supplied to the driving/detection switching circuit 117 through the inverter 391 and the OR gate 392. As a result, the transmission gates 173 to 178 are opened and the drive voltages from the driver circuit 104 are applied to the vibrators 108.

Then, when the rotor rotates so that the induced voltage i of the vibrator increases, the output of the induced voltage comparison circuit 601 decreases and the output of the comparator 387 goes to the level H. This level H is applied as a set signal to the set terminal of the flip flop circuit 389, whose output goes to the level H. As a result, the gate control signal s changes from the level H to the level L and the respective transmission gates are closed, thereby stopping the application of the drive voltages to the vibrators 108.

As described hereinabove, when the induced voltage the vibrators attains a given magnitude, the supply of the drive voltages is stopped.

On the other hand, the counting circuit 390 counts the number of outputs of the flip flop circuit 389 and, when a pre-determined value is reached, a counter output signal is sent. This counter output signal is supplied as the gate control signal s to the transmission gates 173 to 178 through the OR gate 392 and it is also applied as a drive signal r to the control voltage generating circuit 372. The control voltage generating circuit 372 controls the oscillation frequency of the oscillator 373 in accordance with the output signal of the induced voltage comparison circuit 601. Then, the oscillation signal d of the oscillator 373 is applied as drive voltages to the vibrators 108 through the control circuit 103, the driver circuit 104 and the transmission gates 173 to 178 and therefore drive voltages of this oscillation frequency are applied to the vibrators 108.

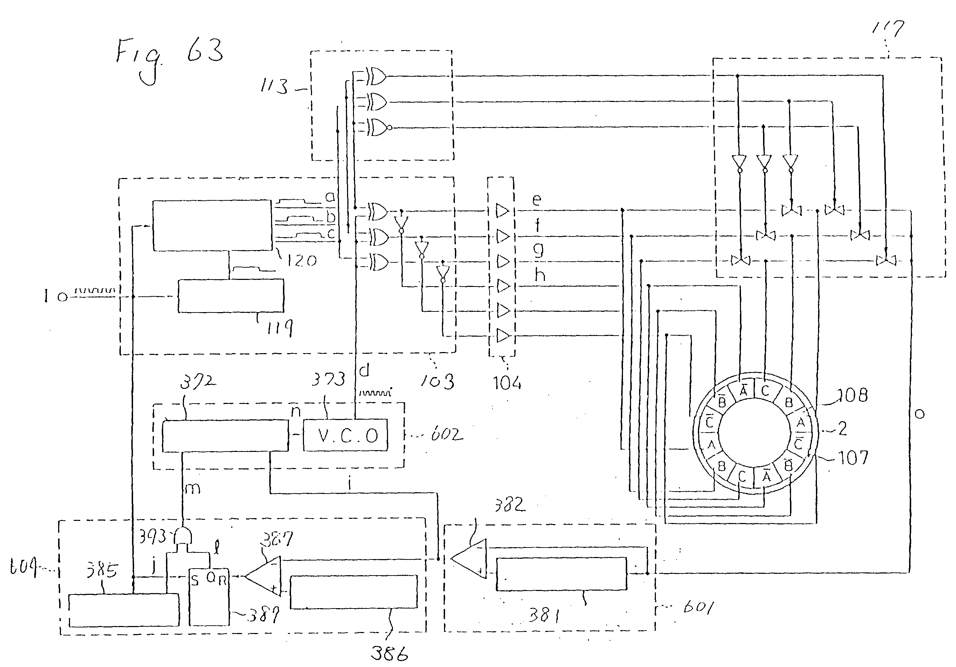

Figure 63 is a circuit diagram showing a further modification of the drive control circuit. This embodiment differs from the previous embodiment in that the frequency follow up is effected when the rotation is not completed in a given period of time. The driving follow up control circuit 604 includes a reference voltage generating circuit 386, a comparator 387, a timer circuit 385, a flip flop circuit 389 and an AND gate 393.

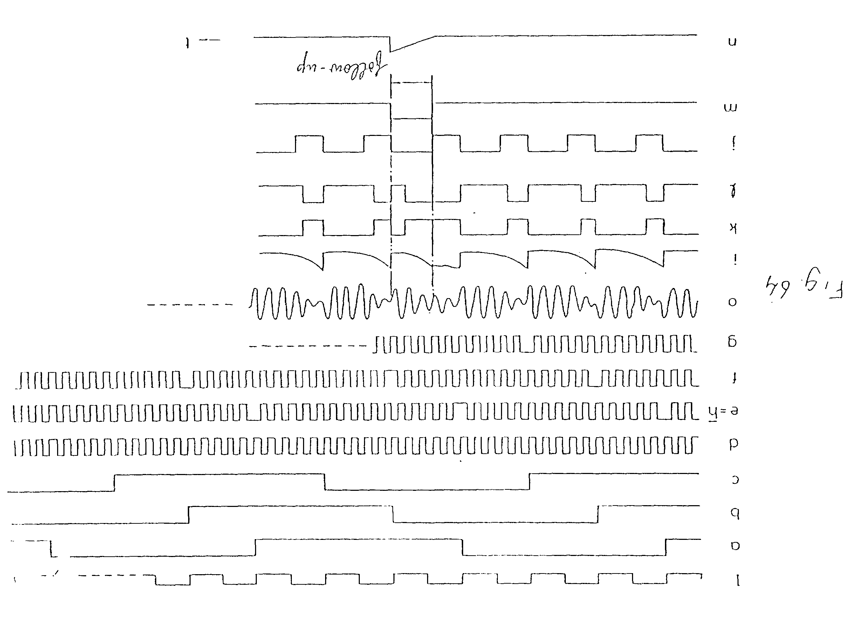

Figure 64 is a timing circuit representing the operation of the embodiment of Figure 63. The flip flop circuit 389 receives the control signal ϕ1 at its set terminal and its output signal l goes to the level H. On the other hand, when the timer circuit 385 receives the control signal ϕ1, its output signal j is held at the level L until a given time period elapses and therefore the output signal m of the AND gate 393 remains at the level L. Then, when the rotor rotates so that the induced voltage attains a given magnitude before the output signal j of the timer circuit 385 goes to the level H, the output signal of the comparator 387 goes to the level H and is applied to the re-set terminal of the flip flop circuit 389. Thus, its output signal l goes to the level L and the output signal m of the AND gate 393 remains at the level L. Thus, the frequency follow up operation is not effected.

However, when the induced voltage does not attain the given magnitude even if the given time period has elapsed thus causing the output signal j of the timer circuit 385 to go to the level H, the output signal j of the timer circuit 385 remains at the level H and the output signal l of the flip flop circuit 389 remains at the level H. Thus, the output signal m of the AND gate 393 goes to the level H and is applied as a drive signal to the control voltage generating circuit 372. In accordance with the output signal i of the induced voltage comparison circuit 601, the control voltage generating circuit 372 generates a control signal n so as to control the oscillation frequency of the oscillator 373.

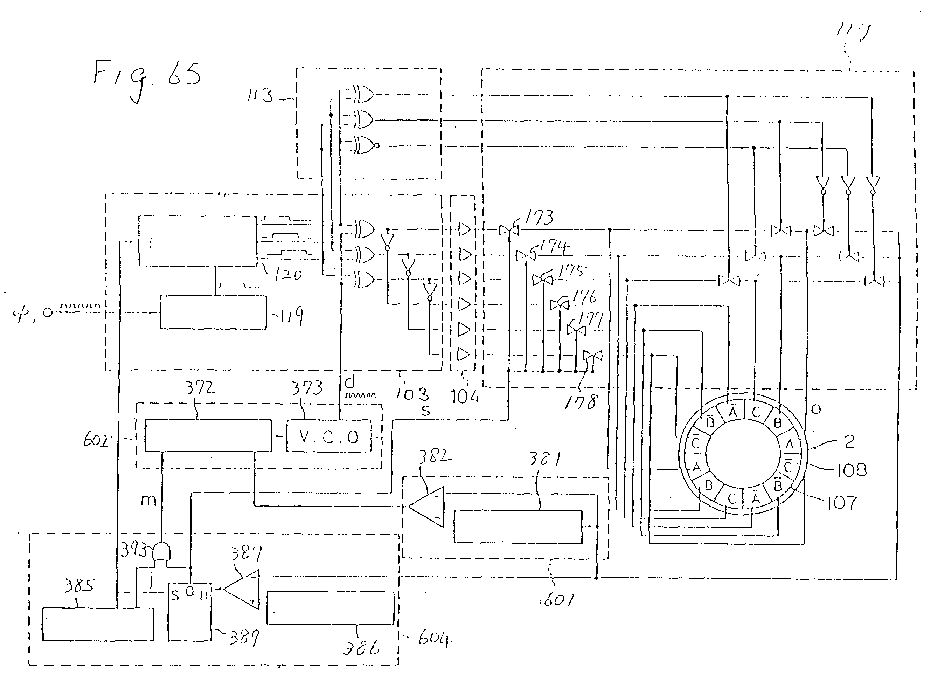

Figure 65 is a circuit diagram showing a further modification of the drive control circuit. This embodiment differs from the previous embodiment in that, when the induced voltage attains a reference voltage, it is considered that the rotor has moved one step and the driving has stopped whereas, when the rotor has failed to rotate within a given time period, the frequency follow up is effected. The driving follow up control circuit 604 includes a timer circuit 385, a reference voltage generating circuit 386, a comparator 387, and an AND gate 393.

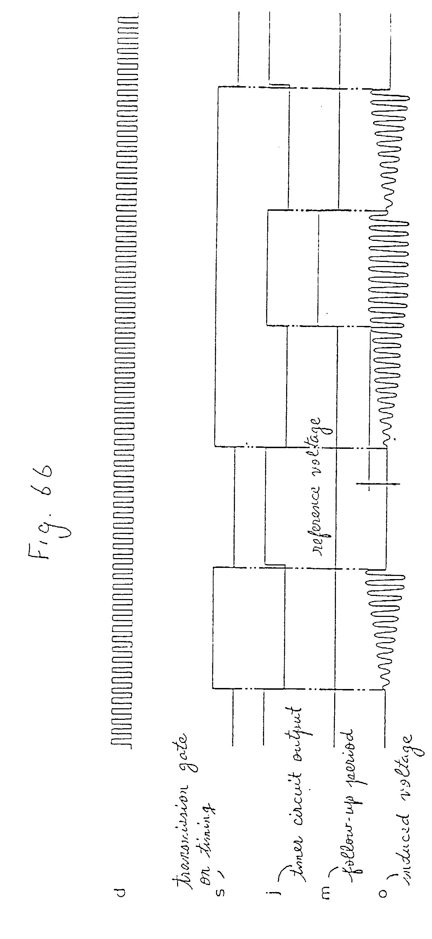

Figure 66 is a timing chart representing the operation of the embodiment of Figure 65. The flip flop circuit 389 receives the control signal ϕ1 at its set terminal so that its output signal goes to the level H and is applied as a gate control signal s to the driving/detection switching circuit 117. As a result, the transmission gates 173 to 178 are opened and the drive voltages are applied to the vibrators 108. On the other hand, the timer circuit 385 receives the control signal ϕ1 for time measurement and its output signal j is held at the level L until a given time period is measured. As a result, the output signal m of the AND gate 393 remains at the level L and thus the frequency follow up circuit 602 is not operated.

Then, when the rotor rotates so that the induced voltage of the vibrators 108 becomes lower than the reference voltage of the reference voltage generating circuit 386 before the timer circuit 385 measures the given time period its output signal j goes to the level H, the output of the comparator 387 goes to the level H and is applied to the re-set terminal of the flip flop circuit 389, whose output goes to the level L. As a result, the transmission gates 173 to 178 are controlled to close and the application of the drive voltages to the vibrators 108 is stopped. Also, the output signal j (at the level H) of the timer circuit 385 and the output signal s (at the level L) of the flip flop circuit 389 are applied to the AND gate 393 so that its output signal m remains at the level L and the frequency follow up circuit 602 is not operated.

However, if the induced voltage of the vibrator 108 does not exceed the reference voltage of the reference voltage generating circuit 386, even if the timer circuit 385 has measured the given time period and its output has gone to the level H, the output of the comparator 387 remains at the level L so that the flip flop circuit 389 is not re-set and its output remains at the level H. Therefore, the output of the AND gate 393 goes to the level H. This output is applied as a drive signal m to the frequency follow up circuit 602 and the control signal generating circuit 372 receives the output signal of the induced voltage comparison circuit 601 thereby supplying a control voltage to the oscillator 373. The oscillator 373 supplies a signal, having an oscillation frequency determined according to the applied control voltage, to the control circuit 103. As a result, drive voltages of this oscillation frequency are applied to the vibrators 108 for driving them.

**Claims**

1. An ultra-sonic motor comprising a stationary part (2) having a plurality of vibrators (108), a movable part (1) having a plurality of projections (1a,1b,1c,1d), which are arranged respectively to contact the stationary part during vibration thereof; and a drive control circuit (103,104,105,106) comprising a drive circuit (104) for applying drive voltages selectively to the vibrators, and a control circuit (103) for generating drive control signals for controlling the supply of the drive voltages by the drive circuit to have a frequency substantially equal to the resonant frequency of the vibrators and each to have a predetermined phase pattern, characterised in that the drive control circuit vibrates the vibrators so as to develop a standing wave in the stationary part so as to effect stepping movement of the movable part.

2. A motor according to claim 1 characterised in that the drive control circuit comprises means for inhibiting the supply of the drive voltages of one polarity to the associated vibrator for controlling the stepping movement of the movable part.

3. A motor according to claim 2 characterised in that the inhibiting means comprise a gate circuit (110) for transmitting the drive voltages supplied by the drive circuit, and a gate control circuit (109) for determining the timing of the transmission of the drive voltages by the gate circuit.

4. A motor according to any of claims 1 to 3 characterised in that the drive control circuit comprises selective inhibiting means (112,113) for selectively inhibiting the supply of the drive voltages to the associated vibrators, during a predetermined portion of each period of the drive voltages or after a given degree of rotation of the movable part, for saving power.

5. A motor according to claim 4 characterised in that the selective inhibiting means comprise a gate circuit (112) for transmitting the drive voltages to the associated vibrators, and timing means (113) for determining when a predetermined period has elapsed following the start of each stepping movement and for effecting on/off control of the gate circuit accordingly.

6. A motor according to claim 4 characterised in that the selective inhibiting means comprise a gate circuit (112) for transmitting the drive voltages to the associated vibrators, detecting means (114) for detecting when the movable part has moved by a predetermined amount after the start of each stepping movement, and gate control means (113) responsive to an output from the detecting means for effecting on/off control of the gate circuit.

7. A motor according to claim 6 characterised in that the detecting means are arranged to sense the voltage induced in a selected one of the vibrators and to compare the induced voltage with a reference for determining when the movable part has moved the predetermined amount.

8. A motor according to any of claims 4 to 7 characterised in that the selective inhibiting means further comprise means (350,351,352) for short circuiting respective vibrators when the supply of the drive voltages is inhibited.

9. A motor according to any preceding claim characterised in that the drive control circuit further comprises monitoring means (601,603) for monitoring a voltage induced in at least one of the vibrators, and a frequency follow up circuit (602) responsive to an output from the monitoring means for adjusting the frequency of the drive voltages supplied by the drive circuit.

10. A motor according to claim 9 characterised in that the monitoring means comprise a comparison circuit (370,371) arranged to compare the induced voltage with a peak value.

11. A motor according to claim 9 characterised in that the monitoring means comprise a comparison circuit (603) arranged to compare the phase of the drive voltage supplied to and the phase of the induced voltage in the at least one vibrator for determining the phase difference therebetween.

12. A motor according to any of claims 9 to 11 characterised in that the drive control circuit further comprises a follow up control circuit (604) for selectively controlling the operation of the frequency follow up circuit.

13. An ultra-sonic motor according to any preceding claim characterised in that the projections (1a,1b, 1c,1d) correspond in number to nodes produced when said vibrators are set in vibration, and in that the control circuit (103) supplies the drive circuit (104) with supply voltages of positive and/or negative polarities such that drive voltages having a frequency substantially equal to the resonant frequency of the vibrators and the stator are successively applied in a predetermined phase pattern to said vibrators.

**14.** An ultra-sonic motor including a stator (2) having a plurality of vibrators (108) successively arranged so as to excite said stator, and a rotor (1) formed with projections (1a,1b,1c,1d) corresponding in number to nodes produced when said vibrators are set in vibration, said projections being arranged to contact said stator, characterised by a drive control circuit for vibrating the vibrators so as to develop a standing wave in the stationary port so as to effect stepping movement of the rotor, the drive control circuit comprising a drive circuit (104) for applying drive voltages having a predetermined frequency in a predetermined phase pattern to said vibrators, an induced voltage comparison circuit (601,603) for detecting an induced voltage in a selected one of the vibrators to generate a detection output, a driving/detection switching circuit (117) for interrupting all or part of the outputs of the drive circuit at a predetermined timing so as to output an induced voltage of one or more of said vibrators corresponding to said interrupted output or outputs to said induced voltage comparison circuit, and a frequency follow up circuit (602) responsive to the detection output of said induced voltage comparison circuit to adjust the frequency of said drive voltages generated from said drive circuit.

**Patentansprüche**

**1.** Ultraschallmotor mit einem stationären Teil (2) mit einer Mehrzahl von Vibratoren (108), einem beweglichen Teil (1) mit einer Mehrzahl von Vorsprüngen (1a, 1b, 1c, 1d), welche jeweils angeordnet sind, um den stationären Teil während der Vibration hiervon zu kontaktieren; und einem Antriebssteuerkreis (103, 104, 105, 106) mit einem Antriebskreis (104) zum selektiven Anlegen von Antriebsspannungen an die Vibratoren, und einem Steuerkreis (103) zum Erzeugen von Antriebssteuersignalen zur Steuerung der Zufuhr der Antriebsspannungen durch den Antriebskreis, um eine Frequenz, welche im wesentlichen mit der Resonanzfrequenz der Vibratoren übereinstimmt, und jeweils ein vorbestimmtes Phasenmuster zu erlangen, dadurch gekennzeichnet, daß der Antriebssteuerkreis ein Vibrieren der Vibratoren bewirkt, um eine stehende Welle in dem stationären Teil zu entwickeln, um eine Schrittbewegung des beweglichen Teils zu bewirken.

**2.** Motor gemäß Anspruch 1, dadurch gekennzeichnet, daß der Antriebssteuerkreis Mittel zum Hemmen der Zufuhr der Antriebsspannungen einer Polarität zu dem jeweiligen Vibrator zur Steuerung der Schrittbewegung des beweglichen Teils aufweist.

**3.** Motor gemäß Anspruch 2, dadurch gekennzeichnet, daß die Hemmittel einen Gate-Kreis (110) zur Übertragung der Antriebsspannungen, welche von dem Antriebskreis zugeführt sind, und einen Gate-Steuerkreis (109) zur Bestimmung der Zeitsteuerung der Übertragung der Antriebsspannungen durch den Gate-Kreis aufweisen.

**4.** Motor gemäß einem der Ansprüche 1 - 3, dadurch gekennzeichnet, daß der Antriebssteuerkreis Mittel (112, 113) zur selektiven Hemmung für das selektive Hemmen der Zufuhr der Antriebsspannungen zu den jeweiligen Vibratoren während eines vorbestimmten Teils jeder Periode der Antriebsspannungen oder nach einem bestimmten Grad der Rotation des beweglichen Teils zur Einsparung von Energie aufweist.

**5.** Motor gemäß Anspruch 4, dadurch gekennzeichnet, daß die Mittel zur selektiven Hemmung einen Gate-Kreis (112) zur Übertragung der Antriebsspannungen zu den jeweiligen Vibratoren und Zeitsteuerungsmittel (113) zur Bestimmung, wann eine vorbestimmte Periode abgelaufen ist, nachdem jede Schrittbewegung begonnen hat, und zur Ausführung einer Ein/Aus-Steuerung des Gate-Kreises in entsprechender Weise aufweisen.

**6.** Motor gemäß Anspruch 4, dadurch gekennzeichnet, daß die Mittel zur selektiven Hemmung einen Gate-Kreis (112) zur Übertragung der Antriebsspannungen zu den jeweiligen Vibratoren, Erfassungsmittel (114) zur Erfassung, wann sich der bewegliche Teil um einen vorbestimmten Betrag bewegt hat, nachdem jede Schrittbewegung begonnen hat, und Gate-Steuermittel (113), reagierend auf einen Ausgang von den Erfassungsmitteln, zur Ausführung einer Ein/Aus-Steuerung des Gate-Kreises aufweisen.

**7.** Motor gemäß Anspruch 6, dadurch gekennzeichnet, daß die Erfassungsmittel angeordnet sind, um die in einem ausgewählten der Vibratoren induzierte Spannung zu erfassen, und um die induzierte Spannung mit einer Referenz zur Bestimmung, wann sich der bewegliche Teil um den vorbestimmten Betrag bewegt hat, zu vergleichen.

**8.** Motor gemäß einem der Ansprüche 4 bis 7, dadurch gekennzeichnet, daß die Mittel zur selektiven Hemmung des weiteren Mittel (350, 351, 352) zum Kurzschluß jeweiliger Vibratoren bei Hemmung der Zufuhr der Antriebsspannungen aufweisen.

**9.** Motor gemäß einem der vorhergehenden Ansprüche, dadurch gekennzeichnet, daß der Antriebssteuerkreis des weiteren Überwachungsmittel (601, 603) zur Überwachung einer in einem der Vibratoren induzierten Spannung und einen Frequenznachfolgekreis (602), reagierend auf einen Ausgang von den Überwachungsmitteln, zum Anpassen der Frequenz der Antriebsspannungen, welche vom Antriebskreis zugeführt sind, aufweist.

**10.** Motor gemäß Anspruch 9, dadurch gekennzeichnet, daß die Überwachungsmittel einen Vergleichskreis (370, 371) aufweisen, welcher zum Vergleich der induzierten Spannungen mit einem Spitzenwert angeordnet ist.

**11.** Motor gemäß Anspruch 9, dadurch gekennzeichnet, daß die Überwachungsmittel einen Vergleichskreis (603) aufweisen, welcher zum Vergleich der Phase der Antriebsspannung, welche zugeführt ist, und der Phase der induzierten Spannung in dem mindestens einen Vibrator zur Bestimmung des Phasenunterschieds dazwischen angeordnet ist.

**12.** Motor gemäß einem der Ansprüche 9 bis 11, dadurch gekennzeichnet, daß der Antriebssteuerkreis des weiteren einen Nachfolgesteuerkreis (604) zur selektiven Steuerung der Operation des Frequenznachfolgekreises aufweist.

**13.** Ultraschallmotor gemäß einem der vorhergehenden Ansprüche, dadurch gekennzeichnet, daß die Vorsprünge (1a, 1b, 1c, 1d) der Anzahl nach Knoten entsprechen, welche entstehen, wenn die Vibratoren in Vibration gebracht sind, und daß der Steuerkreis (103) den Antriebskreis (104) mit Zuführspannungen positiver und/oder negativer Polaritäten versorgt, so daß Antriebsspannungen mit einer Frequenz, welche im wesentlichen mit der Resonanzfrequenz der Vibratoren und des Stators übereinstimmt, sukzessiv in einem vorbestimmten Phasenmuster an die Viratoren angelegt werden.

**14.** Ultraschallmotor mit einem Stator (2) mit einer Mehrzahl von Vibratoren (108) in sukzessiver Anordnung, um den Stator zu erregen, und einem Rotor (1), welcher mit Vorsprüngen (1a, 1b, 1c, 1d) ausgebildet ist, welche der Anzahl nach Knoten entsprechen, welche entstehen, wenn die Vibratoren in Vibration gebracht sind, wobei die Vorsprünge angeordnet sind, um den Stator zu kontaktieren, gekennzeichnet durch einen Antriebssteuerkreis zur Vibration der Vibratoren, um eine stehende Welle in dem stationären Teil zu entwickeln, um eine Schrittbewegung des Rotors zu bewirken, wobei der Antriebssteuerkreis einen Antriebskreis (104) zum Anlegen von Antriebsspannungen mit einer vorbestimmten Frequenz in einem vorbestimmten Phasenmuster an die Vibratoren, einen Kreis (601, 603) zum Vergleich induzierter Spannung zur Erfassung einer induzierten Spannung in einem ausgewählten der Vibratoren zur Erzeugung eines Erfassungsausgangs, einen Antriebs-/Erfassungsschaltkreis (117) zur Unterbrechung von allen oder Teilen der Ausgänge des Antriebskreises bei vorbestimmter Zeitsteuerung zur Ausgabe einer induzierten Spannung eines Vibrators oder mehrerer der Vibratoren entsprechend des unterbrochenen Ausgangs oder der Ausgänge an den Kreis zum Vergleich induzierter Spannung und einen Frequenznachfolgekreis (602), reagierend auf den Erfassungsausgang des Kreises, zum Vergleich induzierter Spannung zum Anpassen der Frequenz der Antriebsspannungen, welche aus dem Antriebskreis entstanden sind, aufweist.

## Revendications

**1.** Moteur à ultrasons comprenant une partie fixe (2) comportant une pluralité de vibreurs (108), une partie mobile (1) comportant une pluralité de saillies (1a, 1b, 1c, 1d), qui sont agencées, respectivement, de manière à entrer en contact avec la partie fixe pendant la vibration de celle-ci, et un circuit de commande d'entraînement (103, 104, 105, 106) comprenant un circuit d'entraînement (104) pour appliquer des tensions d'entraînement, de manière sélective, aux vibreurs, et un circuit de commande (103) pour générer des signaux de commande d'entraînement pour commander l'application des tensions d'entraînement par le circuit d'entraînement de manière à avoir une fréquence sensiblement égale à la fréquence de résonance des vibreurs et de manière à avoir, pour chacune, une configuration de phase prédéterminée, caractérisé en ce que le circuit de commande d'entraînement fait vibrer les vibreurs de manière à développer une onde stationnaire dans la partie fixe, afin d'effectuer le mouvement pas-à-pas de la partie mobile.

**2.** Moteur selon la revendication 1, caractérisé en ce que le circuit de commande d'entraînement comprend des moyens destinés à inhiber l'application des tensions d'entraînement d'une certaine polarité au vibreur associé pour commander le mouvement pas-à-pas de la partie mobile.

**3.** Moteur selon la revendication 2, caractérisé en ce que les moyens d'inhibition comprennent un circuit de porte (110) pour transmettre les tensions d'entraînement appliquées par le circuit d'entraînement, et un circuit de commande de porte (109) pour déterminer la synchronisation de la transmission des tensions d'entraînement par le circuit de porte.

4. Moteur selon l'une quelconque des revendications 1 à 3 , caractérisé en ce que le circuit de commande d'entraînement comprend des moyens d'inhibition sélective (112, 113) destinés à inhiber, de manière sélective, l'application des tensions d'entraînement aux vibreurs associés, pendant une partie prédéterminée de chaque période des tensions d'entraînement ou après un degré donné de rotation de la partie mobile, afin d'économiser de la puissance.

5. Moteur selon la revendication 4, caractérisé en ce que les moyens d'inhibition sélective comprennent un circuit de porte (112) pour transmettre les tensions d'entraînement aux vibreurs associés et des moyens de synchronisation (113) destinés à déterminer quand une période prédéterminée s'est écoulée à la suite du début de chaque mouvement pas-à-pas et à effectuer la commande d'activation/désactivation du circuit de porte, en conséquence.

6. Moteur selon la revendication 4, caractérisé en ce que les moyens d'inhibition sélective comprennent un circuit de porte (112) pour transmettre les tensions d'entraînement aux vibreurs associés, des moyens de détection (114) destinés à détecter quand la partie mobile s'est déplacée d'une quantité prédéterminée après le début de chaque mouvement pas-à-pas, et des moyens de commande de porte (113) sensibles à une sortie des moyens de détection pour effectuer la commande d'activation/désactivation du circuit de porte.

7. Moteur selon la revendication 6, caractérisé en ce que les moyens de détection sont agencés de manière à détecter la tension induite dans un des vibreurs sélectionné et à comparer la tension induite avec une référence pour déterminer quand la partie mobile s'est déplacée de la quantité prédéterminée.

8. Moteur selon l'une quelconque des revendications 4 à 7, caractérisé en ce que les moyens d'inhibition sélective comprennent, de plus, des moyens (350, 351, 352) destinés à mettre en court-circuit les vibreurs respectifs lorsque l'application des tensions d'entraînement est inhibée.

9. Moteur selon l'une quelconque des revendications précédentes, caractérisé en ce que le circuit de commande d'entraînement comprend, de plus, des moyens de commande (601, 603) destinés à contrôler une tension induite dans au moins un des vibreurs et un circuit de suivi de fréquence (602) sensible à une sortie des moyens de contrôle pour régler la fréquence des tensions d'entraînement appliquées par le circuit d'entraînement.

10. Moteur selon la revendication 9, caractérisé en ce que les moyens de contrôle comprennent un circuit de comparaison (370, 371) agencé de manière à comparer la tension induite à une valeur de crête.

11. Moteur selon la revendication 9, caractérisé en ce que les moyens de contrôle comprennent un circuit de comparaison (603) agencé de manière à comparer la phase de la tension d'entraînement appliquée et la phase de la tension induite dans le au moins un vibreur pour déterminer la différence de phase entre celles-ci.

12. Moteur selon l'une quelconque des revendications 9 à 11, caractérisé en ce que le circuit de commande d'entraînement comprend, de plus, un circuit de commande de suivi (604) pour commander, de manière sélective, le fonctionnement du circuit de suivi de fréquence.

13. Moteur à ultrasons selon l'une quelconque des revendications précédentes, caractérisé en ce que les saillies (1a, 1b, 1c, 1d) correspondent en nombre aux noeuds produits lorsque lesdits vibreurs sont mis en vibration et en ce que le circuit de commande (103) applique au circuit d'entraînement (104) des tensions d'alimentation de polarités positive et/ou négative, de sorte que les tensions d'entraînement ayant une fréquence sensiblement égale à la fréquence de résonance des vibreurs et du stator soient appliquées successivement selon une configuration de phase prédéterminée auxdits vibreurs.

14. Moteur à ultrasons comprenant un stator (2) comportant une pluralité de vibreurs (108), agencés successivement de manière à exciter ledit stator, et un rotor (1) comportant des saillies (1a, 1b, 1c, 1d) correspondant en nombre aux noeuds produits lorsque lesdits vibreurs sont mis en vibration, lesdites saillies étant agencées de manière à entrer en contact avec ledit stator, caractérisé par un circuit de commande d'entraînement pour faire vibrer les vibreurs de manière à développer une onde stationnaire dans la partie fixe afin d'effectuer le mouvement pas-à-pas du rotor, le circuit de commande d'entraînement comprenant un circuit d'entraînement (104) pour appliquer des tensions d'entraînement ayant une fréquence prédéterminée selon une configuration de phase prédéterminée auxdits vibreurs, un circuit de comparaison de tension induite (601, 603) pour détecter une tension induite dans un des vibreurs sélectionné pour générer une sortie de détection, un circuit de commutation entraînement/détection (117) pour interrompre toutes les sorties ou une partie des sorties du circuit d'entraînement à un instant prédéterminé afin de sortir une tension induite d'un ou plusieurs desdits vibreurs correspondant à ladite sortie interrompue ou auxdites sorties interrompues vers ledit circuit de comparaison de tension induite, et un circuit de suivi de fréquence (602) sensible à la sortie de détection dudit circuit de comparaison de tension induite pour régler la fréquence desdites tensions d'entraînement générées par ledit circuit d'entraînement.

101
102
102a
103
103a
104
100
105a
106a
108
105
106
107
Fig. 1

5
1c
2
7
1
1a
3
8
3a
4
6
Fig. 3

10
1a
10a
1
1b
1c
1d
N
A
N
B
N
A
N
B
N
3
2
Fig. 2a
11
1b
11a
1
1d
N
A
N
B
N
A
N
B
N
Fig. 2b
1
12a
12
N
A
N
B
N
A
N
2
B
N
Fig. 2c
13a
13
1
N
A
N
B
N
A
2
N
B
N
Fig. 2d
N
A
N
B
N
A
N
B
N
Fig. 2e

A
B1
1a
2
B2
B
C̄
3
1
B̄
B3
Ā
C
1d
B4
1b
C
Ā
B5
B
B̄
A
B6
C̄
1c
B7

Fig. 4

1a
B1
B2
A
C̄
3
2
1
B
B̄
B3
2c
C
Ā
1b
1d
B4
Ā
C
B5
B̄
B
B6
C̄
A
1c
B7

Fig.5

A B C $\bar{A}$ $\bar{B}$ $\bar{C}$ A B C $\bar{A}$ $\bar{B}$ $\bar{C}$
B1
B2
B3
B4
B5
B6
B7
1a
1b
1c
1d

Fig. 6

B1 B2 B3 B4 B5 B6 B7
A
+
-
B
C
$\bar{A}$
$\bar{B}$
$\bar{C}$

B1 B2 B3
A
B

Fig. 8

Fig. 7

1a
B1
3
B̄
B2
B8
A
1
2
B3
B7
B
Ā
B6
B4
1b
B5

Fig. 9

A
B
Ā
B̄
1a
1b
B1
B2
B3
B4
B5
B6
B7
B8
B1 B2 B3 B4 B5 B6 B7 B8
A
B
Ā
B̄
B1
B2
B3
B4
A
B

Fig. 10

Fig. 11

Fig. 12

φ1
φ1/6 a
201
φ1/6 b
202
φ1/6 c
203
φr
φ̄r
204
205
206
t

Fig. 14

107
2
108
A
C̄
B
B̄
C
Ā
A
Ā
C
B̄
B
C̄
A
104
+V
151
152
153
154
155
156
126
125
206
124
141
142
143
204
205
133
135
136
131
132
134
φr̄
106
201
121
122
123
127
φ1/6a
φ1/6b
φ1/6c
202
203
φr
120
119
103
φ1

Fig. 15

107
2
108
101
151
152
153
154
155
156
124
125
126
206
141
204
205
142
143
131
132
133
134
135
136
106
127
201
121
122
123
202
203
119
120
103

Fig. 16

Fig. 17

φ1
a
b
c
d
e = h̄
f
g
i
j
k
m
n
o
p
q
A
B
C


Fig. 18

A
B
C
$\overline{A}$
$\overline{B}$
$\overline{C}$
+
-
B1
B2
B3
N1
N2
N3


Fig. 19

Fig. 20

Fig. 21
2
107
108
110
104
103
109
119
120
151
152
153
154
155
156
161
162
163
124
125
126
175
178
179
180
s
u
v
w
a
b
c
d
e
g
h
r
φ1

φ
g = ℓ = V̄
r
s
u = W̄
B1
B2
B3
B4 ≡ B1
Fig. 22

B1
B2
B3
B4
t

Fig. 23

N3 = N2
N4 = N1
N1 = N4
N3 = N2
N2 = N3
N4 = N1
N2 = N3
N1 = N4
A
C
B
A
C
B
A
C
B
A
C
B

Fig. 24

2
107
108
110
300
109
104
119
120
161
162
163
178
175
151
152
153
154
155
156
A
B
C
a
b
c
d
e
f
g
h
s
u
v
w
$\phi_1$

Fig. 25

A
B
C
$\overline{A}$
$\overline{B}$
$\overline{C}$
B1 B2 B3
N2
N1=N3
N2
N1=N3
N1=N3
N2
N2
N1=N3
A
B
C
$\overline{A}$
$\overline{B}$
$\overline{C}$

Fig. 26

Fig. 27

Fig. 28

φ1
x
s
p
e
q
o = f
t = g
u

Fig. 29

A
+
-
B
C
A
B
C
B1'
B1
B2'
B2
B3'
B3
Fig. 30A
N2'
N1
N2
C
B
A
N1
N2
Fig. 30B

node portion
oppositely phased driven portions
λ no. of divisions
2 - 12
a
b 1st step
c 2nd step
d opposite in phase to c
e ½-step driving
f 3/2-step driving
(15°)
2 - 8
a
b 1st step (half step)
c 2nd step
2 - 16
a
b 1st step
c power save driving of b
d ½-step driving
e 3/2-step driving
1 - 10
a
b 1st step
c ½-step driving
d 2nd step
e 3/2-step driving
3 - 36
a
b 1st step
c power-save driving of b
d 2nd step
e ½ step driving
f 5/2-step driving

Fig. 31

113
2
108
107
102
103
d
104
12


Fig. 32

signal from oscillation circuit
frequency divider circuit
rotation detecting monostable multivibrator
signal from drive control circuit
drive waveform
t


Fig. 33

Fig. 34

φ1
a
b
c
d
e = h̄
f
g
j
k
ℓ

Fig. 35

102
103
104
112
113
114
2
108
107
Fig. 36
309
311
310
151
308
120
119
161
162
163
124
125
126
173
Fig. 37

I
a
b
c
d
e=h̄
=k
f
g
i
j
ℓ

Fig. 38

Fig. 39

Fig. 40

2
107
108
112
115
114
113
104
103
102
Fig. 41

Fig. 43

Fig 4H
power save
103
104
112
113
119
120
2
107
108

I
a
b
c
d
e = h̄ = k
f
g
ℓ = O
m = P
n = Q
r
i

Fig. 45

power save

Fig. 46

a
b
c
d
e = h̄ = O = Q
f
g
j
k
ℓ
m = n
P = R̄

Fig. 47

333
354
113
356
ℓ
j
k
357
355
i
d̄
ℓ̄
151 m
173
350
a
131
e
n
b
121
h
o
p
c
14-1
124
132
174
133
120
152
351
175
f
142
122
134
125
176
352
119
1
ϕ₁
135
g
177
107
123
143
2
136
126
104
178
112
108
103
d
106
A
Ā
B
B̄
C
C̄


Fig. 48

a
b
c
d
f
g

Fig. 49

drive waveform
d
d
i
j
differentiated waveform
k
charge cancellation (shorting) timing
l
vibrator terminal voltage
current waveform to vibrator
vibration displacement

Fig. 50

2
108
107
117
601
113
104
118
103
602
102
2
108
107
117
603
118
113
104
602
103
102

Fig. 51

Fig. 52

V. C. O
Fig. 53

I
a
b
c
d
e=h
f
g
k
l
m
j
i
Fig. 54

113
2
108
107
102
103
104
117
602
601
604
114

Fig. 55

rotation period
voltage level variation

Fig. 56

Fig. 57

l
a
b
c
d
e=h̄
f
g
ℓ
m
n
i
h
j
follow-up
follow-up
follow - up

Fig. 58

Fig. 59
117
108
2
107
113
103
104
602
601
604
373
V.C.O
372
381
382
386
387
388
389
120
119
m
n
o
e
f
g
h
a
b
c
d
j
k
S
R
Q

l
a
b
c
d
e=h̄
f
g
m
n
o
i
j
k
q

Fig. 60

Fig. 61
117
113
104
103
120
119
2
108
107
173
174
175
176
177
178
V.C.O
373
602
392
382
381
601
386
387
389
390
391
604
d
S
$\Phi_1$

VCO output
differentiator output
latch output
counting circuit output
transmission gate on timing
induced voltage
follow-up

Fig. 62

Fig. 63
113
117
a
b
c
120
I
119
e
f
g
h
d
103
104
108
2
107
o
372
373
n
V.C.O
602
m
i
382
393
l
387
604
385
j
S Q R
389
386
381
601

l
a
b
c
d
e=h̄
f
g
o
i
k
ℓ
j
m
n
follow-up
t

Fig. 64

Fig. 65
V.C.O
2
108
107
104
103
113
120
119
372
373
381
382
385
386
387
389
393
601
602
604
173
174
175
176
177
178

Fig. 66
p
s
transmission gate
on timing
i
timer circuit output
m
follow-up period
o
induced voltage
reference voltage